# EUROPEAN PATENT SPECIFICATION

(11) **EP 3 471 621 B1**
(45) Date of publication and mention of the grant of the patent: **29.04.2026**
(21) Application number: 17815910.9
(22) Date of filing: 01.06.2017
(51) Int. Cl.: B01L 3/00, G01N 15/14, G01N 1/40

(54) **DEVICES AND METHODS FOR ACOUSTIC PARTICLE SEPARATION**
VORRICHTUNGEN UND VERFAHREN ZUR AKUSTISCHEN PARTIKELTRENNUNG
DISPOSITIFS ET PROCÉDÉS DE SÉPARATION DE PARTICULES ACOUSTIQUES

(30) Priority: 21.06.2016 US 201662352806 P
(43) Date of publication of application: 24.04.2019
(73) Proprietor: Becton, Dickinson and Company, Franklin Lakes, NJ 07417-1880 (US)
(72) Inventor: YU, Liping, San Jose, California 95124 (US)
(74) Representative: Arnold & Siedsma
(86) International application number: PCT/US2017/035526
(87) International publication number: WO 2017/222777

(56) References cited:
- WO-A1-2010/024753
- WO-A2-2015/191534
- WO-A2-98/51387
- US-A- 5 951 456
- US-A1- 2008 245 709
- US-A1- 2008 245 745
- US-A1- 2014 216 992
- US-A1- 2015 177 111
- US-B1- 6 881 314

## Description

### INTRODUCTION

Acoustic standing waves can be used to concentrate particles in a fluid at acoustic pressure nodal or antinodal planes within the fluid. Particles in a fluid filled cavity are subjected to sonic irradiation (e.g., ultrasonic waves), resulting in a time-averaged drift force that transports particles to the acoustic force potential minima in a manner which depends on the acoustic contrast ratio between the particles and the fluid. Particles subjected to acoustic waves are influenced by forces of the standing wave field, which are divided into axial and transverse components of the primary radiation force. Where plane waves are employed, the minima of the acoustic radiation force potential are the pressure nodal and antinodal planes. Secondary forces which result from particle-particle interactions due to scattering of incident waves exert torque on the particles and help to aggregate particles into concentrated clumps. The magnitude of the radiation force is proportional to the acoustic frequency of the applied sound waves.

### SUMMARY

The present invention relates to an acoustic separator according to claim 1, a system comprising said acoustic separator according to claim 11, a method of producing said acoustic separator according to claim 10, and a method of processing a sample according to claim 12.

Apparatuses and methods for the discrimination of particles utilizing acoustic force are known from US 6881314.

Aspects of the present disclosure include an acoustic separator for acoustically processing components of sample, such as a biological sample. Acoustic separator according to certain embodiments include an acoustic field generator soldered to a flow channel having a fluid flow path where the acoustic field generator produces an acoustic field in the fluid flow path. Methods of soldering an acoustic field generator to a flow channel having a fluid flow path are also described. Methods for acoustically separating components of a sample as well as systems and kits, including one or more acoustic separators, suitable for practicing the subject methods are also provided.

In some embodiments, the soldered acoustic field generator is a piezoelectric transducer, such as a lead zirconate titanate piezoelectric transducer. In some instances, the acoustic field generator is soldered to a glass flow channel, such as a glass flow channel having a metal layer present between the external surface of the flow channel and the acoustic field generator. The metal layer is stably associated with the external surface of the flow channel and may be gold, chromium, platinum, among other metals or a combination thereof. In certain instances, the metal layer between the acoustic field generator and the flow channel includes gold and tin, such as a metal layer having gold in an amount from 50% to 90% (e.g., 75%) by weight and tin in an amount of from 10% to 90% (e.g., 25%) by weight. In embodiments, the acoustic concentrator is soldered to the flow channel with a solder composition. In some instances, the solder composition has a melting temperature of 200 °C or less. In certain instances, the solder composition includes indium or a mixture of indium with another metal, such as indium-tin or indium-silver, or a combination thereof.

Aspects of the present disclosure also include methods for soldering an acoustic field generator to a flow channel having a fluid flow path. In some embodiments, methods include melting a solder composition at a temperature that is 315 °C or less and affixing the acoustic field generator to the flow channel with the solder composition to form an acoustic field generator that is soldered to the flow channel. In some instances, affixing the acoustic field generator to the flow channel includes contacting the melted solder composition with the acoustic field generator and coupling the acoustic field generator to the flow channel. In other instances, affixing the acoustic field generator to the flow channel includes contacting the melted solder composition with the flow channel and coupling the acoustic field generator to the flow channel. In yet other embodiments, methods include positioning the solder between and in contact with both the acoustic field generator and the flow channel and melting the solder to affix the acoustic field generator to the external surface of the flow channel. Methods, in certain embodiments, further include applying a metal layer to the external surface of the flow channel and soldering the acoustic field generator to the metal layer on the flow channel.

Aspects of the present disclosure also include methods and systems for processing a sample. Methods according to certain embodiments include applying an acoustic wave to the sample in a flow channel with an acoustic field generator that is soldered to the flow channel. In some instances, the applied acoustic wave is sufficient to acoustically separate larger components from smaller components in the sample. The sample may be a biological sample and methods may include separating larger components such as tissue, tissue fragments and cell aggregates from smaller components such as free cells. In other embodiments, methods include separating free cells from smaller non-cellular components such as cellular debris, proteins and nucleic acid fragments.

### BRIEF DESCRIPTION OF THE DRAWINGS

The invention may be best understood from the following detailed description when read in conjunction with the accompanying drawings. Included in the drawings are the following figures:

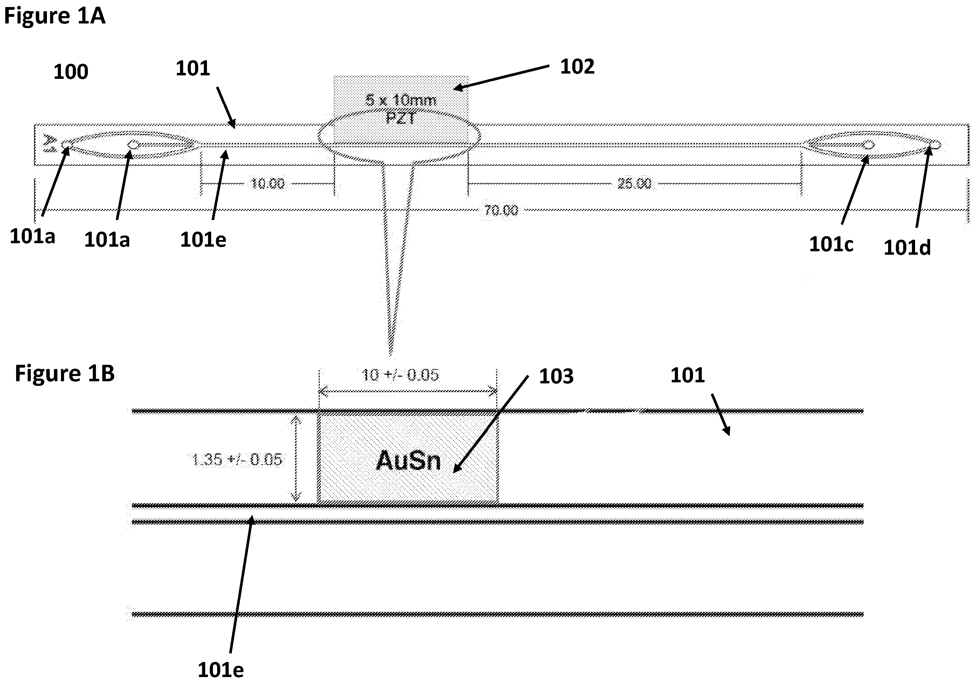

**Figure 1A** illustrates an acoustic separator having an acoustic field generator that is soldered to the external surface of a flow channel according to certain embodiments.
**Figure 1B** is an exploded view of the position where an acoustic field generator is soldered to a flow channel according to certain embodiments.

### DETAILED DESCRIPTION

Aspects of the present disclosure include an acoustic separator for acoustically separating components of sample, such as a biological sample. Acoustic separators according to certain embodiments include an acoustic field generator soldered to a flow channel having a fluid flow path where the acoustic field generator produces an acoustic field in the fluid flow path. Methods of soldering an acoustic field generator to a flow channel having a fluid flow path are also described. Methods for acoustically separating components of a sample as well as systems and kits, including one or more acoustic separators, suitable for practicing the subject methods are also provided.

Before the present invention is described in greater detail, it is to be understood that this invention is not limited to particular embodiments described, as such may vary. It is also to be understood that the terminology used herein is for the purpose of describing particular embodiments only, and is not intended to be limiting, since the scope of the present invention will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the invention. The upper and lower limits of these smaller ranges may independently be included in the smaller ranges and are also encompassed within the invention, subject to any specifically excluded limit in the stated range. Where the stated range includes one or both of the limits, ranges excluding either or both of those included limits are also included in the invention.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, representative illustrative methods and materials are now described.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

Any recited method can be carried out in the order of events recited or in any other order which is logically possible.

As reviewed above, the present disclosure provides an acoustic concentrator for acoustically processing components of sample, such as a biological sample. In further describing embodiments of the disclosure, acoustic concentrators having an acoustic field generator soldered to a flow channel having a fluid flow path are first described in greater detail. Next, methods for soldering an acoustic field generator to a flow channel are described. Methods and systems for acoustically processing a sample, such as a biological sample are described.

### ACOUSTIC SEPARATORS HAVING AN ACOUSTIC FIELD GENERATOR SOLDERED TO A FLOW CHANNEL

As summarized above, aspects of the present disclosure include an acoustic separator for acoustically processing a sample, such as a biological sample. In the invention, acoustic separators, which in some instances may be referred to as acoustic concentrators, include an acoustic field generator soldered to a flow channel having a fluid flow path. The term "soldered" is used herein in its conventional sense to refer to permanently affixing two or more components together with a melted solder composition between the two components. As such, in the subject acoustic concentrators, the acoustic field generator and flow channel are not coupled together by an adhesive, such as a polymeric gel, acrylate gel (e.g., a cyanoacrylate adhesive) or an epoxy resin. In some embodiments, soldered acoustic concentrators as described herein exhibit an increase in the efficiency of acoustic energy transfer from the acoustic field generator to the flow channel as compared to acoustic energy transfer from an acoustic field generator that is coupled to a flow channel with an adhesive, such as an increase by 5% or more, such as by 10% or more, such as by 15% or more, such as by 25% or more, such as by 50% or more, such as by 75% or more, such as by 90% or more, such as by 95% or more, such as by 99% or more. In certain embodiments, the efficiency of acoustic energy transfer from the acoustic field generator to the flow channel in the subject soldered acoustic concentrators is increased by 2-fold or more as compared to acoustic energy transfer from an acoustic field generator that is coupled to a flow channel with an adhesive, such as by 2.5-fold or more, such as by 3-fold or more, such as 5-fold or more and including by 10-fold or more.

In embodiments, acoustic concentrators include one or more acoustic field generators. As described above, the acoustic field generator is configured to apply an acoustic radiation force (e.g., an acoustic standing wave) to a fluid sample in the flow channel. Any convenient acoustic field generator may be employed, where acoustic field generators of interest may include, but are not limited to, piezoelectric transducers, ultrasonic wave propagators, surface acoustic wave generators, among other devices capable of producing an acoustic radiation force in a fluidic sample. In certain embodiments, acoustic field generators of interest are piezoelectric transducers. The piezoelectric transducer may be formed from any suitable piezoelectric material, such as quartz, lithium niobate, lead metaniobate, and polycrystalline ceramics including polycrystalline ceramics with perovskite layer structures, tungsten bronze, a bismuth layer or double perovskite layer structures, lead free pieozoelectric materials with perovskite structures such as (K,Na)NbO₃ or (Bi,Na)TiO₃, as well as lead containing polycrystalline ferroelectric ceramics such as PZT (lead zirconate titanate) or derivatives thereof (e.g., soft-type PZTs such as PZT5H and PZT5A and hard-type PZTs such as PZT4 and PZT8). In certain embodiments, the acoustic field generator includes PZT. In certain instances, the piezoelectric transducer is of the multi-layer type, but a bimorph piezoelectric element may also be used as well as any other kind of ultrasound generating element with suitable dimensions. The acoustic concentrator may include one or more acoustic field generators soldered to the flow channel, such as 2 or more, such as 3 or more, such as 4 or more, such as 5 or more and including 10 or more acoustic field generators soldered to the flow channel.

The acoustic field generator may be of any desirable shape, such as a rectilinear shape (e.g., squares, rectangles, trapezoids, triangles, hexagons, etc.), a curvilinear shape (e.g., circles, ovals, etc.) as well as irregular shapes, (e.g., a parabolic bottom portion coupled to a planar top portion). In certain embodiments, the acoustic field generator is a cube or bar-shaped piezoelectric transducer. In certain embodiments, the acoustic field generator is a cube or bar-shaped piezoelectric transducer having a substantially flat face that is soldered to the flow channel. By "having a substantially flat face" is meant that the acoustic field generator does not wrap (wholly or partially) around the flow channel. As such, in these embodiments, the acoustic field generator is bar-shaped or cube-shaped having one of the flat edge faces soldered to the flow channel.

Depending on the size of the flow channel, the acoustic field generator may have a width that varies, ranging from 1 mm to 15 mm, such as from 2 mm to 14 mm, such as from 3 mm to 13 mm, such as from 4 mm to 12 mm and including from 5 mm to 10 mm. In certain embodiments, the width of the acoustic field generator is 5 mm. The length of the acoustic field generator may also vary, ranging from 1 mm to 50mm, such as 1 to 25 mm, such as from 2 mm to 22.5 mm, such as from 3 mm to 20 mm, such as from 4 mm to 17.5 mm and including from 5 mm to 15 mm. In certain embodiments, the acoustic field generator is 10 mm. In certain instances, the acoustic field generator is a PZT piezoelectric transducer having a width of 5 mm and a length of 10 mm.

In embodiments, all or part of the acoustic field generator positioned proximate to the flow channel is soldered to the flow channel. For example, where the acoustic field generator is a bar-shaped or cube-shaped piezoelectric transducer, all or part of the flat edge face positioned proximate to the flow channel is soldered to the flow channel, such as 10% or more of the flat edge face positioned proximate to the flow channel, such as 15% or more, such as 25% or more, such as 50% or more, such as 75% or more, such as 90% or more and including 95% or more. In certain embodiments, the entire flat edge face (i.e., 100%) of the acoustic field generator is soldered to the flow channel. As such, the acoustic field generator may be soldered to the flow channel over an area of from 1 mm² to 250 mm², such as from 2 mm² to 225 mm², such as from 3 mm² to 200 mm², such as from 4 mm² to 175 mm², such as from 5 mm² to 150 mm², such as from 6 mm² to 125 mm², such as from 7 mm² to 100 mm², such as from 8 mm² to 75 mm² and including from 10 mm² to 50 mm².

Acoustic field generators of interest are configured to apply an acoustic wave that has frequency of that corresponds to the fundamental resonance mode of the vibration transducer (e.g., about 2MHz for many PZT plates). The frequency may, in some embodiments, instead correspond to a harmonic of the vibration transducer, such as a first harmonic, second harmonic, and the like. In various aspects, the frequency applied may be about 1.5 MHz or more, such as 2 MHz or more, such as 2.5 MHz or more, such as 3 MHz or more, such as 3.5 MHz or more, such as 4 MHz or more, such as 4.5 MHz or more, such as 5 MHz or more, such as 5.5 MHz or more and including about 6 MHz or more. For example, the frequency of applied acoustic wave may range from 1.0 MHz to 6MHz, such as from 1.5 to 5.5 MHz, such as from 2 MHz to 5 MHz, such as from 2.5 to 4.5 MHz and including from 3 MHz to 4 MHz. An upper limit for the frequency of the applied acoustic wave may, in certain instances, be 10 MHz or less, such as 7.5 MHz or less, and including 5 MHz or less. The acoustic field generator is configured to apply an acoustic wave having a pressure amplitude that varies and may range from 0.01 MPa to 1 MPa, such as from 0.05 MPa to 0.95 MPa, such as from 0.1 MPa to 0.9 MPa, such as from 0.2 MPa to 0.8 MPa and including from 0.25 MPa to 0.75 MPa.

The acoustic field generator may be soldered to the flow channel with any convenient solder. Suitable solders may include, but are not limited to metal alloys that include one or more of antimony, bismuth, copper, nickel, indium, lead, silver, tin, gold, zinc, germanium, arsenic, aluminum, cadmium, iron, phosphorus, sulfur and combinations thereof. In some embodiments, the solder is an indium solder. In other embodiments, the solder is an indium-tin alloy solder. In yet other embodiments, the solder is an indium-silver alloy solder. In certain embodiments, the solder is an alloy selected from Sn₅₀Zn₄₉Cu₁, Sn_{95.5}Cu₄Ag_{0.5}, Sn₉₀Zn₇Cu₃, Pb₉₀Sn₁₀, Pb₈₈Sn₁₂, Pb₈₅Sn₁₅, Pb₈₀Sn₂₀, Pb₇₅Sn₂₅, Pb₆₈Sn₃₂, Pb₇₀Sn₃₀, Pb₆₈Sn₃₀Sb₂, Sn₃₀Pb₅₀Zn₂₀, Sn₃₃Pb₄₀Zn₂₈, Pb₆₇Sn₃₃, Pb₆₅Sn₃₅, Pb₆₀Sn₄₀, Pb₅₅Sn₄₅, Sn₅₀Pb₅₀, Sn₅₀Pb_{48.5}Cu_{1.5}, Sn₆₀Pb₄₀, Sn₆₀Pb₃₈Cu₂, Sn₆₀Pb₃₉Cu₁, Sn₆₂Pb₃₈, Sn₆₃Pb₃₇, Sn₆₃Pb₃₇P_{0.0015-0.04}, Sn₆₂Pb₃₇Cu₁, Sn₇₀Pb₃₀, Sn₉₀Pb₁₀, Sn₉₅Pb₅, Pb₉₂Sn_{5.5}Ag_{2.5}, Pb₈₀Sn₁₂Sb₈, Pb₈₀Sn₁₈Ag₂, Pb₇₉Sn₂₀Sb₁, Pb₅₅Sn_{43.5}Sb_{1.5}, Sn₄₃Pb₄₃Bi₁₄, Sn₄₆Pb₄₆Bi₈, Bi₅₂Pb₃₂Sn₁₆, Bi₄₆Sn₃₄Pb₂₀, Sn₆₂Pb₃₆Ag₂, Sn_{62.5}Pb₃₆Ag_{2.5}, Pb₈₈Sn₁₀Ag₂, Pb₉₀Sn₅Ag₅, Pb_{92.5}Sn₅Ag_{2.5}, Pb_{93.5}Sn₅Ag_{1.5}, Pb_{95.5}Sn₂Ag_{2.5}, In₉₇Ag₃, In₉₀Ag₁₀, In₇₅Pb₂₅, In₇₀Pb₃₀, In₆₀Pb₄₀, In₅₀Pb₅₀, In₅₀Sn₅₀, In₇₀Sn₁₅Pb_{9.6}Cd_{5.4}, Pb₇₅In₂₅, Sn₇₀Pb₁₈In₁₂, Sn_{37.5}Pb_{37.5}In₂₅, Pb₉₀In₅Ag₅, Pb_{92.5}In₅Ag_{2.5}, Pb_{92.5}In₅Au_{2.5}, Pb_{94.5}Ag_{5.5}, Pb₉₅Ag₅, Pb_{97.5}Ag_{2.5}, Sn_{97.5}Pb₁Ag_{1.5}, Pb_{97.5}Ag_{1.5}Sn₁, Pb₅₄Sn₄₅Ag₁, Pb₉₆Ag₄, Pb₉₆Sn₂Ag₂, Sn₆₁Pb₃₆Ag₃, Sn₅₆Pb₃₉Ag₅, Sn₃₃Ag₂, Sn₆₅Ag₂₅Sb₁₀, Sn_{96.5}Ag_{3.0}Cu_{0.5}, Sn_{95.8}Ag_{3.5}Cu_{0.7}, Sn_{95.6}Ag_{3.5}Cu_{0.9}, Sn_{95.5}Ag_{3.8}Cu_{0.7}, Sn_{95.25}Ag_{3.8}Cu_{0.7}Sb_{0.25}, Sn_{95.5}Ag_{3.9}Cu_{0.6}, Sn_{95.5}Ag₄Cu_{0.5}, Sn_{96.5}Ag_{3.5}, Sn₉₆Ag₄, Sn₉₅Ag₅, Sn₉₄Ag₆, Sn₉₃Ag₇, Sn₉₅Ag₄Cu₁, Sn₁₀₀, Sn_{99.3}Cu_{0.7}, Sn₉₉Cu_{0.7}Ag_{0.3}, Sn₉₇Cu₃, Sn₉₇Cu_{2.75}Ag_{0.25}, Zn₁₀₀, Bi₁₀₀, Sn₉₁Zn₉, Sn₈₅Zn₁₅, Zn₉₅Al₅, Sn_{91.8}Bi_{4.8}Ag_{3.4}, Sn₇₀Zn₃₀, Sn₈₀Zn₂₀, Sn₆₀Zn₄₀, Pb₆₃Sn₃₅Sb₂, Pb₆₃Sn₃₄Zn₃, Pb₉₂Cd₈, Sn₄₈Bi₃₂Pb₂₀, Sn₈₉Zn₈Bi₃, Sn_{83.6}Zn_{7.6}In_{8.8}, Sn_{86.5}Zn_{5.5}In_{4.5}Bi_{3.5}, Sn_{86.9}In₁₀Ag_{3.1}, Sn₉₅Ag_{3.5}Zn₁Cu_{0.5}, Sn₉₅Sb₅, Sn₉₇Sb₃, Sn₉₉Sb₁, Sn₉₉Ag_{0.3}Cu_{0.7}, Sn_{96.2}Ag_{2.5}Cu_{0.8}Sb_{0.5}, Sn₈₈In_{8.0}Ag_{3.5}Bi_{0.5}, Bi₅₇Sn₄₂Ag₁, Bi₅₈Sn₄₂, Bi₅₈Pb₄₂, In₈₀Pb₁₅Ag₅, Pb₆₀In₄₀, Pb₇₀In₃₀, Sn_{37.5}Pb_{37.5}In₂₆, Sn₅₄Pb₂₆In₂₀, Pb₈₁In₁₉, In₅₂Sn₄₈, Sn₅₂In₄₈, Sn₅₈In₄₂, Sn_{51.2}Pb_{30.6}Cd_{18.2}, Sn_{77.2}In₂₀Ag_{2.8}, In₇₄Cd₂₆, In_{61.7}Bi_{30.8}Cd_{7.5}, Bi_{47.5}Pb_{25.4}Sn_{12.6}Cd_{9.5}In₅, Bi₄₈Pb_{25.4}Sn_{12.8}Cd_{9.6}In₄, Bi₄₉Pb₁₈Sn₁₅In₁₈, Bi₄₉Pb₁₈Sn₁₂In₂₁, Bi_{50.5}Pb_{27.8}Sn_{12.4}Cd_{9.3}, Bi₅₀Pb_{26.7}Sn_{13.3}Cd₁₀, Bi_{44.7}Pb_{22.6}In_{19.1}Cd_{5.3}Sn_{8.3}, In₆₀Sn₄₀, In_{51.0}Bi_{32.5}Sn_{16.5}, Bi_{49.5}Pb_{27.3}Sn_{13.1}Cd_{10.1}, Bi_{50.0}Pb_{25.0}Sn_{12.5}Cd_{12.5}, Bi_{50.0}Pb_{31.2}Sn_{18.8}, Bi₅₀Pb₂₈Sn₂₂, Bi₅₆Sn₃₀In₁₄, Cd₉₅Ag₅, Cd_{82.5}Zn_{17.5}, Cd₇₀Zn₃₀, Cd₆₀Zn₄₀, Cd₇₈Zn₁₇Ag₅, Sn₄₀Zn₂₇Cd₃₃, Zn₉₀Cd₁₀, Zn₆₀Cd₄₀, Cd₇₀Sn₃₀, Sn₅₀Pb₃₂Cd₁₈, Sn₄₀Pb₄₂Cd₁₈, Zn₇₀Sn₃₀, Zn₆₀Sn₄₀, Zn₉₅Sn₅, Sn₉₀Au₁₀, Au₈₀Sn₂₀, Au₉₈Si₂, Au_{96.8}Si_{3.2}, Au_{87.5}Ge_{12.5}, Au₈₂In₁₈ and In₁₀₀

In some embodiments, the solder is a composition that has a melting temperature of 300 °C or less, such as 295 °C or less, such as 290 °C or less, such as 275 °C or less, such as 250 °C or less, such as 225 °C or less, such as 200 °C or less, such as 195 °C or less and including a melting temperature of 175 °C or less. In certain embodiments, the solder includes indium, indium-tin or indium-silver and has a melting temperature of 200 °C or less. In certain embodiments, the solder is a composition that has a melting temperature that is lower than the Curie temperature of the acoustic field generator by 25 °C or more, such as by 30 °C or more, such as by 35 °C or more, such as by 40 °C or more, such as by 50 °C or more, such as by 75 °C or more, such as by 100 °C or more, such as by 125 °C or more and including by 150 °C or more. In some instances, the solder is an indium, indium-tin or indium-silver composition having a melting temperature of 200 °C or less and the melting temperature lower than the Curie temperature of the acoustic field generator by 100 °C or more. In certain instances, the solder is an indium, indium-tin or indium-silver composition having a melting temperature of 200 °C or less and the acoustic field generator is lead zirconate titanate (e.g., PZT) having a Curie temperature of 315 °C.

In embodiments, the acoustic field generator efficiently produces an acoustic radiation pressure in the flow channel. As such, the thickness of the solder used to couple the acoustic field generator to the flow channel may vary depending on the properties of the acoustic field generator and desired acoustic radiation force exerted within the flow channel. In some embodiments, the solder is 10 mm or less, such as 5 mm or less, such as 3 mm or less, such as 2 mm or less, such as 1 mm or less, such as 0.5 mm or less, such as 0.1 mm or less, such as 0.05 mm or less, such as 0.01 mm or less, such as 0.005 mm or less and including 0.001 mm or less. For example, the thickness of the solder used to couple the acoustic field generator to the flow channel ranges from 0.0001 mm to 10 mm, such as from 0.001 mm to 9 mm, such as from 0.01 mm to 7 mm, such as from 0.1 mm to 6 mm and including from 0.25 mm to 5 mm, e.g., 0.3 mm to 1.2 mm, such as 0.3 mm, 0.6 mm or 1.2 mm.

Acoustic concentrators also include a flow channel having a flow path. Flow channels of interest may include one or more flow paths, as desired, such 2 or more flow paths, such as 3 or more flow paths and including 5 or more flow paths. The flow channel may be configured to direct a flow of a fluidic sample through the acoustic concentrator. As such, the flow channel is configured as a planar substrate, whereas cylinder or other geometric shape having one or more flow paths are not covered by the present invention. In certain embodiments, the flow channel is enclosed, such that the flow channel is defined by outer walls that surround a central flow path. The central flow path may be aligned with a longitudinal axis of the flow channel. The central flow path may have any convenient shape, such as, but not limited to, a flow path with a cross-sectional profile of a circle, an ellipse, a square, a rectangle, a pentagon, a hexagon, an irregular cross-sectional profile, combinations thereof, and the like.

In certain embodiments, the flow channel is a planar substrate having one or more flow paths. In these embodiments, the flow channel may have a length that ranges from 5 cm to 100 cm, such as from 6 cm to 90 cm, such as from 7 cm to 80 cm, such as from 8 cm to 70 cm, such as from 9 cm to 60 cm and including from 10 cm to 50 cm. The width of planar flow channels may range, for example, from 1 cm to 25 cm, such as from 2 cm to 22.5 cm, such as from 3 cm to 20 cm, such as from 4 cm to 17.5 cm and including from 5 cm to 15 cm. The height (i.e., thickness) of the planar flow channel substrates of interest may range from 0.01 cm to 2.5 cm, such as from 0.05 cm to 2 cm and including from 0.1 cm to 1 cm.

In other embodiments not covered by the present invention, the flow channel is non-planar and has a geometric or curvilinear cross-sectional shape. In these embodiments, flow channels of interest may have a height (e.g., for flow channels that do not have a round cross-sectional profile) or an inner diameter (e.g., for flow channels that have a round cross-sectional profile) of 5 cm or less, such as 2 cm or less, including 1 cm or less, or 7 mm or less, or 5 mm or less, or 3 mm or less, or 2 mm or less, or 1 mm or less. The length of the flow channel may range from 1 cm to 1000 cm, such as from 2 cm to 750 cm, including from 5 cm to 500 cm, or from 5 cm to 250 cm, or from 10 cm to 100 cm, such as from 10 cm to 50 cm, for example from 10 cm to 25 cm.

The flow channel comprises two or more inlets and outlets in fluid communication with the fluid flow path as desired. For example, the flow channel may have 2 or more inlets, such as 3 or more inlets and including 5 or more inlets. In certain embodiments, the flow channel includes between 2 and 5 inlets, such as between 2 and 4 inlets and including 3 inlets. Likewise, the flow channel includes 2 or more outlets, such as 2 or more outlets, such as 3 or more outlets and including 5 or more outlets. In certain embodiments, the flow channel includes between 2 and 5 outlets, such as between 2 and 4 outlets and including 3 outlets.

The flow channel may be formed from any suitable material which can propagate the acoustic radiation force exerted by the acoustic field generator as well as being a material that is compatible with the fluidic sample flowed therethrough. In embodiments, the flow channel may be silicon, metal, glass (e.g., Pyrex glass, borosilicate glass), ceramic or plastic. In certain embodiments, the flow channel is formed from glass, such as a borosilicate glass. In other embodiments, the flow channel is formed from a plastic, such as a rigid plastic, polymeric or thermoplastic material. For example, suitable plastics may include polycarbonates, polyvinyl chloride (PVC), polyurethanes, polyethers, polyamides, polyimides, or copolymers of these thermoplastics, such as PETG (glycol-modified polyethylene terephthalate), among other polymeric plastic materials. In certain embodiments, the flow channel is formed from a polyester, where polyesters of interest may include, but are not limited to poly(alkylene terephthalates) such as poly(ethylene terephthalate) (PET), bottle-grade PET (a copolymer made based on monoethylene glycol, terephthalic acid, and other comonomers such as isophthalic acid, cyclohexene dimethanol, etc.), poly(butylene terephthalate) (PBT), and poly(hexamethylene terephthalate); poly(alkylene adipates) such as poly(ethylene adipate), poly(1,4-butylene adipate), and poly(hexamethylene adipate); poly(alkylene suberates) such as poly(ethylene suberate); poly(alkylene sebacates) such as poly(ethylene sebacate); poly(ε-caprolactone) and poly(β-propiolactone); poly(alkylene isophthalates) such as poly(ethylene isophthalate); poly(alkylene 2,6-naphthalene-dicarboxylates) such as poly(ethylene 2,6-naphthalene-dicarboxylate); poly(alkylene sulfonyl-4,4'-dibenzoates) such as poly(ethylene sulfonyl-4,4'-dibenzoate); poly(p-phenylene alkylene dicarboxylates) such as poly(p-phenylene ethylene dicarboxylates); poly(trans-1,4-cyclohexanediyl alkylene dicarboxylates) such as poly(trans-1,4-cyclohexanediyl ethylene dicarboxylate); poly(1,4-cyclohexane-dimethylene alkylene dicarboxylates) such as poly(1,4-cyclohexane-dimethylene ethylene dicarboxylate); poly([2.2.2]-bicyclooctane-1,4-dimethylene alkylene dicarboxylates) such as poly([2.2.2]-bicyclooctane-1,4-dimethylene ethylene dicarboxylate); lactic acid polymers and copolymers such as (S)-polylactide, (R,S)-polylactide, poly(tetramethylglycolide), and poly(lactide-co-glycolide); and polycarbonates of bisphenol A, 3,3'-dimethylbisphenol A, 3,3',5,5'-tetrachlorobisphenol A, 3,3',5,5'-tetramethylbisphenol A; polyamides such as poly(p-phenylene terephthalamide); polyesters, e.g., polyethylene terephthalates, e.g., Mylar^{™} polyethylene terephthalate; etc.

In certain embodiments, one or more metal layers are present on an external surface of the flow channel. In these embodiments, the acoustic field generator is soldered to the one or more metal layers on the external surface of the flow channel, such that acoustic concentrators of interest include one or more metal layers between the solder composition and the flow channel. In embodiments, the metal layer is stably associated with the external surface of the flow channel. In certain instances, the metal layer is covalently bonded to the surface of the flow channel. More than one metal layer may be present at the surface of the flow channel, such as 2 or more layers, such as 3 or more layers, such as 4 or more layers and including 5 or more layers. Each metal layer may have a thickness that varies depending on the size of the flow channel as well as the type of solder used to couple the flow channel to the acoustic field generator and may be 0.01 µm or more, such as 0.05 µm or more, such as 0.1 µm or more, such as 0.5 µm or more, such as 1 µm or more, such as 2 µm or more, such as 3 µm or more, such as 5 µm or more, such as 10 µm or more, such as 15 µm or more, such as 25 µm or more and including 50 µm or more. For example the thickness of each metal layer at the surface of the flow channel may range from 0.01 µm to 100 µm, such as from 0.05 µm to 90 µm, such as from 0.1 µm to 80 µm, such as from 0.5 µm to 70 µm, such as from 1 µm to 60 µm and including from 5 µm to 50 µm. For example, each metal layer may have a thickness that ranges from 1 µm to 10 µm, such as from 4 µm to 6 µm, including 5 µm.

In embodiments, the metal composition may be applied to 50% or less of the external surface of the flow channel, such as 40% or less, such as 25% or less, such as 10% or less, such as 5% or less and including 1% or less of the external surface of the flow channel. The metal composition may be applied to the external surface of the flow channel in the form of any convenient shape, as desired, such as in the form of a polygon (e.g., square, rectangle or any other geometric shape) or strips (e.g., straight or non-straight having regular or irregular patterns). Depending on the size of the acoustic field generator, the applied metal layer may have a width that varies, ranging from 1 mm to 15 mm, such as from 2 mm to 14 mm, such as from 3 mm to 13 mm, such as from 4 mm to 12 mm and including from 5 mm to 10 mm. In certain embodiments, the width of the applied metal layer is 1.5 mm. The length of the applied metal layer may also vary, ranging from 1 mm to 50mm, such as 1 mm to 25 mm, such as from 2 mm to 22.5 mm, such as from 3 mm to 20 mm, such as from 4 mm to 17.5 mm and including from 5 mm to 15 mm. In certain embodiments, the length of the applied metal layer is 10 mm. In certain instances, the applied metal layer has a width of 1.5 mm and a length of 10 mm. As such, the metal layer may be applied over an area of from 1 mm² to 250 mm², such as from 2 mm² to 225 mm², such as from 3 mm² to 200 mm², such as from 4 mm² to 175 mm², such as from 5 mm² to 150 mm², such as from 6 mm² to 125 mm², such as from 7 mm² to 100 mm², such as from 8 mm² to 75 mm² and including from 10 mm² to 50 mm².

Any suitable metal may be employed for the metal layer at the external surface of the flow channel so long as it is capable of being soldered to the acoustic field generator with the solder composition, where suitable metals may include, but are not limited to metals such as aluminum, chromium, cobalt, copper, gold, indium, iron, lead, nickel, tin, steel (e.g., stainless steel), silver, zinc and combinations thereof as well as metal alloys, such as an aluminum alloy, aluminum-lithium alloy, an aluminum-nickel-copper alloy, an aluminum-copper alloy, an aluminum-magnesium alloy, an aluminum-magnesium oxide alloy, an aluminum-silicon alloy, an aluminum-magnesium-manganese-platinum alloy, a cobalt alloy, a cobalt-chromium alloy, a cobalt-tungsten alloy, a cobalt-molybdenum-carbon alloy, a cobalt-chromium-nickel-molybdenum-iron-tungsten alloy, a copper alloy, a copper-arsenic alloy, a copper-beryllium alloy, a copper-silver alloy, a copper-zine alloy (e.g., brass), a copper-tin alloy (e.g., bronze), a copper-nickel alloy, a copper-tungsten alloy, a copper-gold-silver alloy, a copper-nickel-iron alloy, a copper-manganese-tin alloy, a copper-aluminum-zinc-tin alloy, a copper-gold alloy, a gold alloy, a gold-silver alloy, an indium alloy, an indium-tin alloy, an indium-tin oxide alloy, an iron alloy, an iron-chromium alloy (e.g., steel), an iron-chromium-nickel alloy (e.g., stainless steel), an iron-silicon alloy, an iron-chromium-molybdenum alloy, an iron-carbon alloy, an iron-boron alloy, an iron-magnesium alloy, an iron-manganese alloy, an iron molybdenum alloy, an iron-nickel alloy, an iron-phosphorus alloy, an iron-titanium alloy, an iron-vanadium alloy, a lead alloy, a lead-antimony alloy, a lead-copper alloy, a lead-tin alloy, a lead-tin-antimony alloy, a nickel alloy, a nickel-manganese-aluminum-silicon alloy, a nickel-chromium alloy, a nickel-copper alloy, a nickel, molybdenum-chromium-tungsten alloy, a nickel-copper-iron-manganese alloy, a nickel-carbon alloy, a nickel-chromium-iron alloy, a nickel-silicon alloy, a nickel-titanium alloy, a silver alloy, a silver-copper alloy (e.g., sterling silver) a silver-copper-germanium alloy (e.g., Argentium sterling silver), a silver-gold alloy, a silver-copper-gold alloy, a silver-platinum alloy, a tin alloy, a tin-copper-antimony alloy, a tin-lead-copper alloy, a tin-lead-antimony alloy, a titanium alloy, a titanium-vanadium-chromium alloy, a titanium-aluminum alloy, a titanium-aluminum-vanadium alloy, a zinc alloy, a zinc-copper alloy, a zinc-aluminum-magnesium-copper alloy, a zirconium alloy, a zirconium-tin alloy or a combination thereof. In some embodiments, the metal layer includes gold and tin. In other embodiments, the metal includes chromium, platinum and gold.

In some embodiments, the flow channel includes a metal layer that includes gold and tin. In these embodiments, the amount of gold in the metal layer varies, ranging from 10% to 90% by weight, such as from 15% to 85% by weight, such as from 20% to 80% by weight, such as from 25% to 75% by weight and including from 35% to 65% gold by weight. In certain instances, the metal layer includes gold in an amount of 75% by weight. The amount of tin in the metal layer may also vary, ranging from 10% to 90% by weight, such as from 15% to 85% by weight, such as from 20% to 80% by weight, such as from 25% to 75% by weight and including from 35% to 65% tin by weight. In certain instances, the metal layer includes tin in an amount of 25% by weight. In certain embodiments, the flow channel includes a metal layer that is 75% gold by weight and 25% tin by weight.

Figure 1A is an illustration of an acoustic concentrator having an acoustic field generator (e.g., PZT) that is soldered to the external surface of a flow channel according to certain embodiments. Acoustic concentrator 100 includes flow channel 101 having inlets 101a and 101b and outlets 101c and 101d and a flow path 101e therebetween. Acoustic field generator 102 (e.g., PZT) is soldered to the surface of flow channel 101 at a position along flow path 101e. The acoustic concentrator depicted in Figure 1A illustrates the configuration of a 70 mm acoustic concentrator with an offset soldered acoustic field generator. Here, acoustic field generator 102 is soldered at a position along flow path 101e that is 10 mm downstream from inlets 101a and 101b and 25 mm upstream from outlets 101c and 101d.

Figure 1B is an exploded view of flow channel 101 where acoustic field generator 102 is soldered to flow channel 101. In Figure 1B, a gold-tin metal layer 103 is applied to the surface of flow channel 101 and the acoustic field generator is soldered to the flow channel through metal layer 103.

In other embodiments, the flow channel includes a metal layer that includes chromium, platinum and gold. In these embodiments, the amount of chromium in the metal layer varies, ranging from 10% to 90% by weight, such as from 15% to 85% by weight, such as from 20% to 80% by weight, such as from 25% to 75% by weight and including from 35% to 65% chromium by weight. The amount of platinum in the metal layer also varies, ranging from 10% to 90% by weight, such as from 15% to 85% by weight, such as from 20% to 80% by weight, such as from 25% to 75% by weight and including from 35% to 65% platinum by weight. The amount of gold in the metal layer also varies, ranging from 10% to 90% by weight, such as from 15% to 85% by weight, such as from 20% to 80% by weight, such as from 25% to 75% by weight and including from 35% to 65% gold by weight. In yet other embodiments, the flow channel includes a metal layer that includes chromium, nickel and gold. In these embodiments, the amount of chromium in the metal layer varies, ranging from 10% to 90% by weight, such as from 15% to 85% by weight, such as from 20% to 80% by weight, such as from 25% to 75% by weight and including from 35% to 65% chromium by weight. The amount of nickel in the metal layer also varies, ranging from 10% to 90% by weight, such as from 15% to 85% by weight, such as from 20% to 80% by weight, such as from 25% to 75% by weight and including from 35% to 65% platinum by weight. The amount of gold in the metal layer also varies, ranging from 10% to 90% by weight, such as from 15% to 85% by weight, such as from 20% to 80% by weight, such as from 25% to 75% by weight and including from 35% to 65% gold by weight. The thickness of any given metal layer in these embodiments may vary, ranging in some instances from 0.01 to 1 microns, such as 0.1 to 5 microns.

In certain embodiments, the flow channel includes two metal layers: a first metal layer having gold and tin and a second metal layer having chromium, platinum and gold. The ratio of the thickness of the gold-tin metal layer and the thickness of the chromium-platinum-gold metal layer may vary depending on the type of solder and acoustic field concentrator, ranging from 1:1 and 1:5, such as 1:1 and 1:4.5, such as 1:1 and 1:4, such as 1:1 and 1:3.5, such as 1:1 and 1:3, such as 1:1 and 1:2.5, such as 1:1 and 1:2 including 1:1 and 1:1.5, or a range thereof. For example, the thickness ratio between the gold-tin metal layer and the chromium-platinum-gold metal layer may range between 1:1 and 1:1.5; 1:1.5 and 1:2; 1:2 and 1:2.5; 1:2.5 and 1:3; 1:3 and 1:3.5; 1:3.5 and 1:4; 1:4 and 1:4.5; 1:4.5 and 1:5, or a range thereof. In other embodiments, thickness ratio of the chromium-platinum-gold metal layer and the gold-tin metal layer ranges between 1:1 and 1:5, such as 1:1 and 1:4.5, such as 1:1 and 1:4, such as 1:1 and 1:3.5, such as 1:1 and 1:3, such as 1:1 and 1:2.5, such as 1:1 and 1:2 including 1:1 and 1:1.5. For example, the thickness ratio between the chromium-platinum-gold metal layer and the gold-tin metal layer may range between 1:1 and 1:1.5; 1:1.5 and 1:2; 1:2 and 1:2.5; 1:2.5 and 1:3; 1:3 and 1:3.5; 1:3.5 and 1:4; 1:4 and 1:4.5; 1:4.5 and 1:5, or a range thereof.

### METHODS FOR SOLDERING AN ACOUSTIC FIELD GENERATOR TO A FLOW CHANNEL

As summarized above, aspects of the present disclosure include methods for soldering an acoustic field generator to a flow channel. In practicing the subject methods according to certain embodiments, a solder is melted and the acoustic field generator is affixed to an external surface of the flow channel with the solder. In some embodiments, methods include contacting the melted solder with the acoustic field generator and coupling the acoustic field generator to the flow channel. In other embodiments, methods include contacting the melted solder with flow channel and coupling the acoustic field generator to the flow channel. In yet other embodiments, methods include positioning the solder between and in contact with both the acoustic field generator and the flow channel and melting the solder to affix the acoustic field generator to an external surface of the flow channel.

In embodiments, the solder is melted at a temperature of 300 °C or less, such as 295 °C or less, such as 290 °C or less, such as 275 °C or less, such as 250 °C or less, such as 225 °C or less, such as 200 °C or less, such as 195 °C or less and including a melting temperature of 175 °C or less, down to the lowest melting temperature of the solder under the conditions of fabrication, depending on the type of solder and acoustic field generator. In some embodiments, the solder includes indium, indium-tin or indium-silver and is melted at a temperature of 200 °C or less. In certain embodiments, the temperature employed to melt the solder depends on the Curie temperature of the acoustic field generator. For example, the solder may be melted at a temperature that is lower than the Curie temperature of the acoustic field generator by 25 °C or more, such as by 30 °C or more, such as by 35 °C or more, such as by 40 °C or more, such as by 50 °C or more, such as by 75 °C or more, such as by 100 °C or more, such as by 125 °C or more and including by 150 °C or more. In certain instances, the acoustic field generator is lead zirconate titanate (e.g., PZT) having a Curie temperature of 315 °C and the solder is an indium, indium-tin or indium-silver composition that is melted at a temperature of 200 °C or less. Any suitable heating protocol may be employed to melt the solder, including but not limited to a heating coil, a radiant or convection oven, an open flame, a hot plate, a heat gun, a heating block, among other heating protocols.

In some embodiments, methods for soldering an acoustic field generator to a flow channel include: 1) melting the solder; 2) contacting the solder with the acoustic field generator to produce an acoustic field generator-solder adduct; and 2) coupling the flow channel to the acoustic field generator-solder adduct. In some instances, the solder may be contacted with the acoustic field generator immediately after melting the solder. In other instances, the solder is contacted with the acoustic field generator after a predetermined duration, such as after 5 seconds or more, such as after 10 seconds or more, such as after 15 seconds or more, such as after 30 seconds more including after 60 seconds or more. In certain embodiments the solder is contacted and maintained in contact with the acoustic field generator while melting the solder such that the acoustic field generator-solder adduct is formed concurrently while melting the solder.

In some embodiments, the produced acoustic field generator-solder adduct is then immediately coupled to the flow channel. In other embodiments, the solder component of the acoustic field generator-solder composition is reheated until melting and then subsequently coupled to the flow channel. In yet other embodiments, the flow channel is maintained in contact with the acoustic field generator-solder adduct while re-melting the solder to couple the acoustic field generator-solder adduct to the flow channel.

In other embodiments, methods for soldering an acoustic field generator to a flow channel include: 1) melting the solder; 2) contacting the solder with the flow channel to produce a flow channel-solder adduct; and 2) coupling the acoustic field generator to the flow channel-solder adduct. In some instances, the solder is contacted with the flow channel immediately after melting the solder. In other instances, the solder is contacted with the flow channel after a predetermined duration, such as after 5 seconds or more, such as after 10 seconds or more, such as after 15 seconds or more, such as after 30 seconds more including after 60 seconds or more. In certain embodiments the solder is contacted and maintained in contact with the flow channel while melting the solder such that the flow channel-solder adduct is formed concurrently while melting the solder.

In some embodiments, the produced flow channel-solder adduct is then immediately coupled to the flow channel. In other embodiments, the solder component of the flow channel-solder composition is reheated until melting and then subsequently coupled to the acoustic field generator. In yet other embodiments, the acoustic field generator is maintained in contact with the flow channel-solder adduct while re-melting the solder to couple the flow channel-solder adduct to the acoustic field generator.

In yet other embodiments, methods for soldering an acoustic field generator to a flow channel include: 1) positioning the solder between and in contact with both the acoustic field generator and the flow channel; and 2) melting the solder to affix the acoustic field generator to the flow channel. In these embodiments, heat is applied to the acoustic field generator, flow channel and solder positioned therebetween by the heating source in a manner sufficient to melt the solder. After the solder is melted, the heat source is removed and upon cooling the acoustic field generator becomes soldered to the flow channel.

Pressure may be applied to one or more of the acoustic field generator and the flow channel at any step during the subject methods. In some embodiments, methods include applying pressure to the acoustic field generator, such as a pressure of 1 kPa or more, such as a pressure of 5 kPa or more, such as a pressure of 10 kPa or more, such as a pressure of 25 kPa or more, such as a pressure of 50 kPa or more, such as a pressure of 100 kPa or more, such as a pressure of 500 kPa or more, such as a pressure of 750 kPa or more, such as a pressure of 1 MPa or more, such as a pressure of 2 MPa or more, such as a pressure of 5 MPa or more and including applying a pressure of 10 MPa or more to the acoustic field generator. **In** other embodiments, methods include applying pressure to the flow channel such as a pressure of 1 kPa or more, such as a pressure of 5 kPa or more, such as a pressure of 10 kPa or more, such as a pressure of 25 kPa or more, such as a pressure of 50 kPa or more, such as a pressure of 100 kPa or more, such as a pressure of 500 kPa or more, such as a pressure of 750 kPa or more, such as a pressure of 1 MPa or more, such as a pressure of 2 MPa or more, such as a pressure of 5 MPa or more and including applying a pressure of 10 MPa or more to the flow channel. **In** yet other embodiments, methods include applying pressure simultaneously to both the acoustic field generator and the flow channel, such as a pressure of 750 kPa or more, such as a pressure of 1 MPa or more, such as a pressure of 2 MPa or more, such as a pressure of 5 MPa or more and including applying a pressure of 10 MPa or more to the acoustic field generator. In other embodiments, methods include applying pressure to the flow channel such as a pressure of 1 kPa or more, such as a pressure of 5 kPa or more, such as a pressure of 10 kPa or more, such as a pressure of 25 kPa or more, such as a pressure of 50 kPa or more, such as a pressure of 100 kPa or more, such as a pressure of 500 kPa or more, such as a pressure of 750 kPa or more, such as a pressure of 1 MPa or more, such as a pressure of 2 MPa or more, such as a pressure of 5 MPa or more and including applying a pressure of 10 MPa or more simultaneously to both the acoustic field generator and the flow channel.

In certain embodiments, methods include applying one or more metal layers onto an external surface of the flow channel before soldering the acoustic field generator to the flow channel. As described above, the metal layer is stably positioned (e.g., covalently bonded) to an external surface of the flow channel. In these embodiments, the acoustic field generator is soldered to the metal layer on the flow channel. As used herein, the term "applying" refers to placing one or more layers of a metal composition onto the external surface of the flow channel. As such, applying may include positioning on top, depositing or otherwise producing a metal composition onto the surface of the flow channel. In some embodiments, methods include depositing a thin layer of a metal composition (as described above) onto the external surface of the flow channel, such as a layer having a thickness of 1 µm or more, such as 2 µm or more, such as 5 µm or more, such as 10 µm or more, such as 25 µm or more, such as 50 µm or more and including 100 µm or more. For example the methods may include depositing a thin layer of a metal composition having a thickness that ranges from 0.01 µm to 100 µm, such as from 0.05 µm to 90 µm, such as from 0.1 µm to 80 µm, such as from 0.5 µm to 70 µm, such as from 1 µm to 60 µm and including from 5 µm to 50 µm. More than one layer of the metal composition may be deposited onto the flow channel surface, such as depositing 2 or more layer, such as 3 or more layers and including 5 or more layers. The amount of deposited metal composition will vary depending on the size of the applied area on the flow channel as well as the number of layers deposited. In certain instances, the amount of metal composition applied is 100 µg or more, such as 250 µg or more, such as 500 µg or more, such as 1000 µg or more, including 2500 µg or more.

In embodiments, the metal composition may be applied to 50% or less of the external surface of the flow channel, such as 40% or less, such as 25% or less, such as 10% or less, such as 5% or less and including 1% or less of the external surface of the flow channel. The metal composition may be applied to the external surface of the flow channel in the form of any convenient shape, as desired, such as in the form of a polygon (e.g., square, rectangle or any other geometric shape) or strips (e.g., straight or non-straight having regular or irregular patterns). Depending on the size of the acoustic field generator, the applied metal layer may have a width that varies, ranging from 1 mm to 15 mm, such as from 2 mm to 14 mm, such as from 3 mm to 13 mm, such as from 4 mm to 12 mm and including from 5 mm to 10 mm. In certain embodiments, the width of the applied metal layer is 1.5 mm. The length of the applied metal layer may also vary, ranging from 1 mm to 25 mm, such as from 2 mm to 22.5 mm, such as from 3 mm to 20 mm, such as from 4 mm to 17.5 mm and including from 5 mm to 15 mm. In certain embodiments, the length of the applied metal layer is 10 mm. In certain instances, the applied metal layer has a width of 1.5 mm and a length of 10 mm. As such, the metal layer may be applied over an area of from 1 mm² to 250 mm², such as from 2 mm² to 225 mm², such as from 3 mm² to 200 mm², such as from 4 mm² to 175 mm², such as from 5 mm² to 150 mm², such as from 6 mm² to 125 mm², such as from 7 mm² to 100 mm², such as from 8 mm² to 75 mm² and including from 10 mm² to 50 mm².

Additional layers of the metal composition may be applied to the flow channel surface if necessary, such as for example to improve smoothness or uniformity of the metal layer. For example, if after evaluating the deposited metal layer it is determined that the metal layer is less than optimal or unsuitable for soldering the flow channel to the acoustic field generator, additional metal composition may be applied to all or part of the deposited metal layer. As such, the thickness of the final deposited metal layer may be increased by 0.1 µm or more, such as 0.5 µm or more, such as 1.0 µm or more, such as 1.5 µm or more, such as 2.0 µm or more, such as 5 µm or more, such as 10 µm or more, including 100 µm or more. The thickness of part or all of each metal layer maybe increased. For example, in some embodiments, methods include increasing the thickness of the entire deposited metal layer. In other embodiments, less than that entire deposited metal layer may be increased in thickness, such as 95% or less of the deposited layer is increased in thickness, such as 75% or less, such as 50% or less, such as 25% or less, such as 10% or less, and including 5% or less of the deposited metal layer is increased in overall thickness. In certain instances, specific regions on the deposited metal layer may be adjusted, resulting in discrete portions of the metal layer having varying thickness.

In some embodiments, prior to applying each metal layer, the external surface of the flow channel is conditioned for applying the metal layer. In certain instances, the external surface of the flow channel is treated with a corona discharge process. The term "corona discharge process" is used herein in its conventional sense to refer to a surface treatment process which prepares a surface to be more receptive to an applied coating (e.g., metal layer). In some embodiments, the external surface of the flow channel is treated with a corona discharge surface treatment by applying a potential across electrodes sufficient to generate a discharge between the electrodes under a gas atmosphere. As such, the external surface of the flow channel can be treated without the use of any liquid solvent. Any convenient gas source may be employed sufficient to produce the corona discharge. For example, the gas may be air, O₂, water vapor, CO₂, oxygen-containing organic gases such as alcohols, ketones, ethers and any combination thereof. Gases for corona discharge treatment may also include nitrogen containing gases, such as N₂ and ammonia. In other instances, the corona discharge process may be carried out using halogenated gases, such as for example, F₂, Cl₂, Br₂, I₂, HF, HCl, HBr and HI, CF₄, CHClF₂, CClF₃, CCl₂F₂, C₂F₆, CBrF₃, CHCl₃, CH₂Cl₂, CH₃CCl₃, CCl₄, or any combination thereof. Suitable corona discharge protocols for preparing the external surface of the flow channel for application of the one or more metal layers also include, but are not limited, surface corona discharge processing described in United States Patent Nos. 4,358,681; 4,879,100; 5,194,291; 5,236,536 and 5,466,424.

### METHODS FOR PROCESSING A BIOLOGICAL SAMPLE

As summarized above, aspects of the present disclosure also include acoustically separating larger components from smaller components with one or more of the acoustic concentrators described herein to collect individual cells in the biological sample. The term "acoustically separating" is used in its conventional sense broadly and generically to refer to a process in which particulate matter (e.g., cells, cellular debris, tissue matter and non-cellular compounds) in a biological sample may be controlled or manipulated by application of an ultrasonic standing wave. Accordingly, in certain embodiments, methods include acoustically sorting components of the biological sample. In other instances, methods include acoustically concentrating and/or washing components of the biological sample.

In embodiments of the present disclosure, the subject methods provide cell samples that exhibit low entrainment. Entrainment is a measure of the degree of aggregation of components (e.g. cells) in a liquid sample, defined as the ratio of the observed distribution of the component over the expected distribution based on a normal Poisson distribution, e.g., as described in Lindmo, et al. (1981) Cytometry, 2, 151-154. In certain aspects, the subject device may facilitate the production of samples with an entrainment factor of 2.0 to 0.0, such as about 1.5 to 0.0, including 1.0 to 0.0, 0.75 to 0.0, about 0.5 to 0.0, 0.4 to 0.02, or 0.25 to 0.0.

As used herein, the term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.)

In embodiments of the present disclosure, the biological sample contains cells. Suitable cells include eukaryotic cells (e.g., mammalian cells) and/or prokaryotic cells (e.g., bacterial cells or archaeal cells). Samples may be obtained from an *in vitro* source (e.g., a suspension of cells from laboratory cells grown in culture) or from an *in vivo* source (e.g., a mammalian subject, a human subject, etc.). In some embodiments, the cellular sample is obtained from an *in vitro* source. *In vitro* sources include, but are not limited to, prokaryotic (e.g., bacterial, archaeal) cell cultures, environmental samples that contain prokaryotic and/or eukaryotic (e.g., mammalian, protest, fungal, etc.) cells, eukaryotic cell cultures (e.g., cultures of established cell lines, cultures of known or purchased cell lines, cultures of immortalized cell lines, cultures of primary cells, cultures of laboratory yeast, etc.), tissue cultures, and the like.

In some embodiments, the sample is obtained from an *in vivo* source and can include samples obtained from tissues (e.g., cell suspension from a tissue biopsy, cell suspension from a tissue sample, etc.) and/or body fluids (e.g., whole blood, fractionated blood, plasma, serum, saliva, lymphatic fluid, interstitial fluid, etc.). In some cases, cells, fluids, or tissues derived from a subject are cultured, stored, or manipulated prior to evaluation. *In vivo* sources include living multi-cellular organisms and can yield non-diagnostic or diagnostic cellular samples.

In certain embodiments the source of the sample is a "mammal" or "mammalian", where these terms are used broadly to describe organisms which are within the class mammalia, including the orders carnivore (e.g., dogs and cats), rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present invention may be applied to samples from a human subject, it is to be understood that the methods may also be carried-out on samples from other animal subjects (that is, in "non-human subjects") such as, but not limited to, birds, mice, rats, dogs, cats, livestock and horses.

In certain embodiments, the biological sample is a specimen that has been preloaded into a container (e.g., blender cup, vortex microtube, sonicator vessel, etc.) configured for use with the acoustic concentrator and is stored in the container for a predetermined period of time before the biological sample is passed through the flow channel of the acoustic concentrator. The amount of time the biological sample is stored following preloading into the container may vary, such as 0.1 hours or more, such as 0.5 hours or more, such as 1 hour or more, such as 2 hours or more, such as 4 hours or more, such as 8 hours or more, such as 16 hours or more, such as 24 hours or more, such as 48 hours or more, such as 72 hours or more, such as 96 hours or more, such as 120 hours or more, such as 144 hours or more, such as 168 hours or more and including preloading the biological sample into the container 240 hours or more or may range such as from 0.1 hours to 240 hours, such as from 0.5 hours to 216 hours, such as from 1 hour to 192 hours and including from 5 hours to 168 hours. For example, the biological sample may be preloaded into a container (e.g., blender cup, vortex microtube, sonicator vessel, etc.) configured for use with the acoustic concentrator at a remote location (e.g., at home using an at-home kit or in a physician's office) and sent to a laboratory for processing in accordance with the subject methods. By "remote location" is meant a location other than the location at which the sample is contained and preloaded into the container. For example, a remote location could be another location (e.g. office, lab, etc.) in the same city, another location in a different city, another location in a different state, another location in a different country, etc., relative to the location of the processing device, e.g., as described in greater detail below. In some instances, two locations are remote from one another if they are separated from each other by a distance of 10 m or more, such as 50 m or more, including 100 m or more, e.g., 500 m or more, 1000 m or more, 10,000 m or more, up to, in some instances, 100,000 m, etc.

Biological samples processed by the subject methods may exhibit a wide range of viscosities. The viscosity of a liquid may depend on temperature. In certain embodiments, a fluid sample has a viscosity substantially equal to that of water at the given temperature (e.g., 1 cP at 20°C, 0.65 cP at 40°C). Fluid samples useful in the present disclosure may exhibit a wide range of viscosities, ranging in some aspects from 0.00001 Pa*s to 0.75 Pa*s (0.01 cP to 750 cP), including 0.0001 Pa*s to 0.1 Pa*s (0.1 cP to 100 cP), such as 0.0001 Pa*s to 0.05 Pa*s (0.1 cP to 50 cP), 0.0002 Pa*s to 0.01 Pa*s (0.2 cP to 10 cP), 0.0002Pa*s to 0.002 Pa*s(0.2 cP to 2.0 cP), 0.0005 Pa*s to 0.0015 Pa*s(0.5 cP to 1.5 cP), or 0.00075 Pa*s to 0.0015 Pa*s (0.75 cP to 1.5 cP).

In embodiments, larger components in the biological sample may include tissue, tissue fragments and cell aggregates while smaller components in the biological sample include individual cells, cellular debris and non-cellular macromolecules. As such, in certain instances, methods include acoustically separating tissue, tissue fragments and cell aggregates from individual cells, cellular debris and non-cellular macromolecules present in the biological sample.

Methods for acoustic separation of interest may include, but are not limited to, those described in United States Patent Publication No. 2015/0177111 filed on December 11, 2014; United States Patent No. 8,956,536; United States Patent No. 6,929,750; Laurell, et al. (2007) Chem. Soc. Rev., 2007, 36, 492-506; Petersson, et al. (2005) Analytical Chemistry 77: 1216-1221; and Augustsson, et al. (2009) Lab on a Chip 9: 810-818. Briefly, an acoustic contrast factor (Φ-factor) depends on both a particle's (e.g., tissue aggregate, cell aggregate or individual cell) density (ρ_{c}) and its compressibility (β_{c}) in relation to the corresponding properties of the surrounding medium (ρ_{w}, β_{w}). An acoustic contrast factor may be positive or negative, which determines the direction of the acoustic force and whether a particular particle will move towards a standing pressure wave node or towards the pressure antinode.

In certain aspects, acoustically separating larger components in the biological sample from smaller components follows the Lund-method, where compounds in the biological sample of different sizes are acoustically separated in a laminar flow microchannel ultrasonically actuated using an acoustic field generator (e.g., a piezoelectric ceramic). In certain embodiments, the width of the channel corresponds to half the desired ultrasonic wavelength, creating a resonator between the side walls of the flow channel in which a standing wave can be formed. In these embodiments, the induced standing wave is generated orthogonal to the incident ultrasonic wave front. Larger components of the biological sample with a positive Φ-factor are moved during flow through the channel, by means of the axial primary radiation force (PRF), towards the pressure nodal plane along the channel center, while smaller components of the biological sample remain close to the side walls. Separation of the larger components from the smaller components is, in certain instances, completed by a split channel outlet configured to provide the separated larger components through a center outlet and the smaller components through one or more side outlets. In some embodiments, the acoustic standing wave is focused to the center of the flow channel. In these embodiments, the acoustic standing wave is configured to propagate within the channel applying an acoustic radiation pressure within the flow channel. In certain instances, the applied acoustic standing wave does not propagate outside of the flow channel. In certain embodiments, the acoustic field is applied only in a single direction by the vibration transducer. As such, in these embodiments the vibration transducer does not simultaneously apply acoustic fields in two or more different directions.

In some embodiments, fluidic flow through the flow channel of the acoustic concentrator is laminar. The term "laminar flow" is used in its conventional sense to refer to the flow dynamic where fluid flows in a plurality of parallel layers which little to no disruption between the layers. For instance, a stream of sheath buffer may be laminated between two streams of sample in the flow through the acoustic concentrator. In these embodiments, when an acoustic field is applied, particles of higher density (e.g., tissue, cell aggregates, etc.) are forced to a node of the acoustic standing wave in a laminate of flowing wash buffer. Larger components of the separated disrupted biological sample may exit the acoustic concentrator device through a dedicated sample outlet while smaller components in parallel laminating sample streams may be directed to different outlets.

The biological sample is conveyed into the flow channel of the acoustic concentrator through one or more inputs. In certain embodiments, during separation the biological sample is carried through the flow channel of the acoustic concentrator along the sides of the flow channel and a laminating wash buffer is flowed between. As such, the first liquid medium (e.g., biological sample) and the second liquid medium (e.g., flowing buffer) are combined in a manner sufficient to produce a laminar flow of the first and second media, i.e., a flow in which the two media are flowing in distinct but adjacent and contacting flow paths. The densities of the first and second media differ in some instances in order to facilitate the manipulation of a component from a first media to a second media, or *vice versa.* For example, in some instances the density difference between the first and second media is 0.01% or greater, such as 0.05% or greater, such as 0.1% or greater, such as 0.5% or greater, such as 1% or greater, such as 2% or greater, such as 5% or greater and including 10% or greater. An upper limit density difference between the first and second media in the subject methods may, in certain instances be 25% or less, such as 20% or less, 15% or less, such as 10% or less and including 5% or less.

In practicing the subject methods, the soldered acoustic field generator (e.g., piezoelectric transducer) is activated to create an acoustic standing wave in the channel. The applied standing wave exerts acoustic radiation pressure to particles of a predetermined size contained in the biological sample so as to move these particles from the sides of the flow channel towards the pressure node formed in the center of the channel (e.g., to a focusing zone in the flowing buffer). In embodiments of the present disclosure, the applied acoustic standing wave is sufficient to separate larger components of the disrupted biological sample from smaller components. For example, methods include concentrating the larger components at the node of the acoustic standing wave in the flow buffer while retaining the smaller components in the disrupted biological sample flow along the sides of flow channel of the acoustic concentrator. In these embodiments, smaller components and larger components present in the biological sample are carried out of the acoustic concentrator through different outlets, thereby effectively separating larger components of the biological sample from smaller components.

As discussed above, depending on the type of biological sample, in some instances larger components in the biological sample may be one or more of tissue, tissue fragments or cell aggregates and smaller components may be one or more of individual cells, cellular debris or non-cellular macromolecules. In certain instances, larger components in the biological sample are cell aggregates and smaller components are individual cells, cellular debris and non-cellular macromolecules in the biological sample. Accordingly, in some embodiments, acoustically separating larger components in the biological sample from smaller components includes separating tissue, tissue fragments or cell aggregates, from individual cells, cellular debris and non-cellular macromolecules in the biological sample. In other embodiments, acoustically separating larger components from smaller components includes separating cell aggregates from individual cells, cellular debris and non-cellular macromolecules in the biological sample. In yet other embodiments, acoustically separating larger components from smaller components includes separating individual cells from cellular debris and non-cellular macromolecules. In still other embodiments, acoustically separating larger components from smaller components includes separating individual cells from cellular debris. In another embodiment, acoustically separating larger components from smaller components includes separating individual cells from non-cellular macromolecules.

The frequency of the applied acoustic wave by the soldered acoustic field generator to acoustically separate components of the biological sample varies depending on the biological sample, the width of flow channel, composition of the buffer solution as well as desired separation of components and may be about 1.5 MHz or more, such as 2 MHz or more, such as 2.5 MHz or more, such as 3 MHz or more, such as 3.5 MHz or more, such as 4 MHz or more, such as 4.5 MHz or more, such as 5 MHz or more, such as 5.5 MHz or more and including about 6 MHz or more. For example, the frequency of applied acoustic wave by the soldered acoustic field generator may range from 1.0 MHz to 6MHz, such as from 1.5 to 5.5 MHz, such as from 2 MHz to 5 MHz, such as from 2.5 to 4.5 MHz and including from 3 MHz to 4 MHz. An upper limit for the frequency of the applied acoustic wave may, in certain instances, be 10 MHz or less, such as 7.5 MHz or less, and including 5 MHz or less. In certain embodiments, the frequency of the acoustic wave that is applied corresponds to the fundamental resonance mode of the soldered acoustic field generator (e.g., vibration transducer), such as for example 2.0 MHz for certain soldered piezoelectric transducer plates. In other embodiments, the frequency of the applied acoustic wave corresponds to a harmonic of the soldered acoustic field generator, such as a first harmonic, a second harmonic and the like.

In some instances, the acoustic concentrator is configured such that the position of one or more acoustic nodes is determined by the speed of sound in the buffer solution employed and acoustic concentrator channel width, given by the equation n = c/λ where n is the frequency, c is the speed of sound in the buffer employed and λ is the width of the channel. For example, where the buffer is 1x phosphate buffer saline (PBS) (the speed of sound being 1500 m/s in 1x PBS) in an acoustic concentrator having a channel width of 375 µm, the resonant frequency is 4 MHz. In these embodiments, a node will occur in the center of the channel at ½ the resonant frequency (i.e., 2 MHz). Accordingly, higher multiples of this frequency will produce multiple nodes in the channel, which provide for a plurality of focusing streams. For example, in these embodiments, a 4 MHz frequency would produce 2 streams, while a 6 MHz frequency would produce 3 streams.

The acoustic pressure amplitude of the acoustic wave applied to separate components of the biological sample may also vary depending on the components of the biological sample, rate of fluid flow during acoustic separation and may range from 0.01 MPa to 1 MPa, such as from 0.05 MPa to 0.95 MPa, such as from 0.1 MPa to 0.9 MPa, such as from 0.2 MPa to 0.8 MPa and including from 0.25 MPa to 0.75 MPa. In embodiments, the acoustic pressure amplitude of the applied acoustic wave is sufficient to acoustically separate individual cells from cell aggregates, cellular debris or non-cellular macromolecules in the disrupted the biological sample.

In methods of the present disclosure, components of the biological sample can be selectively separated based on size. For example, depending on the components of the biological sample, methods may include applying acoustic radiation pressure with the soldered acoustic field generator which is sufficient to separate out components which have diameters of 5 µm or greater, such as 10 µm or greater, such as 25 µm or greater, such as 50 µm or greater and including 100 µm or greater, such as from 10 to 25 µm, such as from 25 to 50 µm, such as from 50 to 75 µm and including from 75 to 100 µm. In some embodiments, the acoustic pressure applied by the soldered acoustic field generator is sufficient to separate tissue, tissue fragments or cell aggregates from individual cells, cellular debris or non-cellular macromolecules in the disrupted biological sample. In other embodiments, the acoustic pressure applied by the soldered acoustic field generator is sufficient to separate individual cells from cell aggregates, cellular debris or non-cellular macromolecules in the disrupted the biological sample.

The activation voltage that is applied may also vary. For example, in certain aspects an activation voltage is 0.1 Vₚₚ to 100 Vₚₚ or higher, such as 0.1 Vₚₚ to 1 Vₚₚ, 1 Vₚₚ to 10 Vₚₚ, 10 Vₚₚ to 20 Vₚₚ, 20 Vₚₚ to 30 Vₚₚ, 30 Vₚₚ to 40 Vₚₚ, 40 Vₚₚ to 50 Vₚₚ, 50 Vₚₚ to 75 Vₚₚ, 75 Vₚₚ to 100 Vₚₚ, or 100 Vₚₚ or higher.

In certain embodiments, the rate of acoustic separation is 1 µl/min or more. For example, in certain aspects the rate is 10 µl/min or more, including 10 µl/min to 50 µl/min, 50 µl/min to 100 µl/min, 100 µl/min to 200 µl/min, 200 µl/min to 300 µl/min, 300 µl/min to 400 µl/min, 400 µl/min to 500 µl/min, 500 µl/min to 600 µl/min, 600 µl/min to 700 µl/min, 700 µl/min to 800 µl/min, 800 µl/min to 900 µl/min, 900 µl/min to 1 ml/min, 1 ml/min to 10 ml/min, 10 ml/min to 20 ml/min, 20 ml/min to 30 ml/min, 30 ml/min to 40 ml/min, 40 ml/min to 50 ml/min, 50 ml/min to 60 ml/min, 60 ml/min to 70 ml/min, 70 ml/min to 80 ml/min, 80 ml/min to 90 ml/min, 90 ml/min to 100 ml/min, 100 ml/min to 150 ml/min, 150 ml/min to 200 ml/min, 200 ml/min to 500 ml/min, or 500 ml/min to 1 L/min. In certain aspects, the flow rate during acoustic separation of larger components in the biological sample from smaller components is adjusted such that output is optimal for subsequent analysis by a feedback monitor, such as 20 to 150 µL/min, including 30 to 100 µL/min, such as 40-60 µL/min.

In certain embodiments, methods further include separating cellular debris and non-cellular macromolecules from individual cells. In practicing the subject methods, cellular debris and non-cellular macromolecules (e.g., protein, enzymes, nucleic acid fragments, lipids, etc.) are separated from individual cells in a second acoustic concentrator fluidically coupled to the first acoustic concentrator used to separate larger components from smaller components in the disrupted biological sample. Smaller components (i.e., cell samples) of the disrupted biological sample collected from the first acoustic concentrator device may be conveyed to the second acoustic concentrator through one or more inputs. In certain embodiments, cellular debris and non-cellular macromolecules are carried along the sides of the channel of the second acoustic concentrator device while individual cells are focused to the center of the channel, with the fluid carrying the cellular debris and non-cellular macromolecules and the fluid carrying the cells operating under laminar flow.

The soldered acoustic field generator is activated to create an acoustic standing wave. In these embodiments, the applied standing wave exerts acoustic radiation pressure to the cells sufficient to move the cells towards the pressure node formed at the center of the conduit (e.g., to a focusing zone in the flowing buffer) where the cells are transported into a wash buffer which occupies the center of the fluidic channel and laminated between sample streams flowing along the side of the channel. In embodiments of the present disclosure, the acoustic standing wave applied by the soldered acoustic field generator is sufficient to separate the individual cells from cellular debris and from non-cellular macromolecules. For example, methods may include concentrating the cells at the node of the acoustic standing wave in the flow buffer while retaining enzymes and non-cellular macromolecules (e.g., enzymatic disrupters) along the sides of acoustic concentrator device channel. In these embodiments, the cells are carried out of the second acoustic concentrator and collected through a center outlet. The separated cellular debris and non-cellular macromolecules are carried out of the second acoustic concentrator and collected through two or more side outlets.

Method may also include analyzing the collected cells. In some instances, analyzing the collected cells includes sorting the cells. For instance, methods may include counting or sorting the collected cells using a flow cytometer. Suitable flow cytometry systems and methods for analyzing and sorting samples of entrained single cells provided by the subject methods include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255. In certain instances, the collected cells are analyzed using a BD Biosciences FACSCanto^{™} flow cytometer, a BD Biosciences Influx^{™} cell sorter, or the like.

In certain embodiments, cells obtained by the subject methods may be further used in research as a research specimen, for diagnostic laboratory testing or for therapeutic applications, as desired, with or without further purification. As discussed above, the biological sample may be any type of organismic tissue or biological fluid, both healthy and diseased (e.g., cancerous, malignant, necrotic, etc.). Accordingly, cells obtained from the processed biological sample may in certain instances be employed as a research or diagnostic specimen for diseases such as cancers including, but not limited to, acute lymphoblastic leukemia, acute myeloid leukemia, adrenocortical carcinoma, anal cancer, appendix cancer, astrocytoma, cerebral amphrogalyeponoisus, basal-cell carcinoma, bile duct cancer, cholangiocarcinoma, bladder cancer, bone tumor, osteosarcoma, malignant fibrous histiocytoma, brainstem glioma, cerebellar astrocytoma, cerebral astrocytoma/malignant glioma, ependymoma, medulloblastoma, supratentorial primitive neuroectodermal tumors, hypothalamic glioma, breast cancer, bronchial adenomas/carcinoids, burkitt's lymphoma,carcinoid tumor, cervical cancer, chronic bronchitis, chronic lymphocytic leukemia, chronic myelogenous leukemia, chronic myeloproliferative disorders, chronic obstructive pulmonary disease (COPD), colon cancer, cutaneous T-cell lymphoma, desmoplastic small round cell tumor, emphysema, endometrial cancer, ependymoma, esophageal cancer, Ewing's sarcoma, extracranial germ cell tumor, extrahepatic bile duct cancer, intraocular melanoma ,retinoblastoma, gallbladder cancer, gastrointestinal carcinoid tumor, gastrointestinal stromal tumor (GIST), germ cell tumor: extracranial, extragonadal, or ovarian, gestational trophoblastic tumor, glioma, hairy cell leukemia head and neck cancer, heart cancer, hepatocellular (liver) cancer, Hodgkin lymphoma, hypopharyngeal cancer, intraocular melanoma, islet cell carcinoma, Kaposi sarcoma, renal cell cancer, laryngeal cancer, leukemias, oral esophageal cancer, liposarcoma, lung cancer, lymphomas, Macroglobulinemia, Waldenström, medullablastoma, melanoma, Merkel cell carcinoma, mesothelioma, mycosis fungoides, myelodysplastic syndromes, nasopharyngeal carcinoma, neuroblastoma, oropharyngeal cancer, osteosarcoma, ovarian cancer, pancreatic cancer, paranasal sinus and nasal cavity cancer, parathyroid cancer, penile cancer, pheochromocytoma, pineal astrocytoma, pineal germinoma, pineoblastoma, prostate cancer, pleuropulmonary blastoma, rectal cancer, rhabdomyosarcoma, salivary gland cancer, sézary syndrome, nonmelanoma, melanoma, soft tissue sarcoma, squamous cell carcinoma, gastrointestinal cancer, T-cell lymphoma, testicular cancer, thyroid cancer, vaginal cancer.

In some embodiments, methods further include loading the collected cells into a container and transporting the cells to a remote location. For example, the cells may be loaded into a container configured for laboratory or medical diagnostic analysis (e.g., microtube, Eppendorf tube, test tube, syringe) and transported to a remote location (e.g., laboratory) for further processing or testing, as desired. By "remote location" is meant a location other than the location at which the cells are collected according to the subject methods. For example, a remote location could be another location (*e.g.,* office, lab, *etc*.) in the same city, another location in a different city, another location in a different state, another location in a different country, *etc.* As such, when one item is indicated as being "remote" from another, what is meant is that the two items are at least in different buildings, and may be at least 1.61 km (one mile), 16.1 km (ten miles), or at least 161 km (one hundred miles) apart, or as described above.

In yet other embodiments, cells obtained by the subject methods may be further used in therapy, being applied by any convenient mode of administration. Depending on the type of cells obtained, formulation of the therapeutic agent may vary. Methods for preparing pharmaceutical formulations may include those described in "Remington: The Science & Practice of Pharmacy", 19th ed., Williams & Williams, (1995), the "Physician's Desk Reference", 52nd ed., Medical Economics, Montvale, NJ (1998), and Kibbe, A.H., Handbook of Pharmaceutical Excipients, 3rd Edition, American Pharmaceutical Association, Washington, D.C., 2000.

For example, formulations having the collected cells may take the form of an injection, e.g., powders or lyophilates that can be reconstituted with a solvent prior to use, as well as ready for injection solutions or suspensions, dry insoluble compositions for combination with a vehicle prior to use, and emulsions and liquid concentrates for dilution prior to administration. In embodiments where the collected cells are formulated for injection, diluents may include, but is not limited to bacteriostatic water, dextrose 5% in water, phosphate buffered saline, Ringer's solution, saline, sterile water, deionized water, and any combinations thereof. Alternatively, the collected cells may be formulated for use in therapy in the form of a liquid solution or suspension, syrup, cream, ointment, tablet, capsule, powder, gel, matrix, suppository, or any combination thereof.

### SYSTEMS FOR PROCESSING A BIOLOGICAL SAMPLE

Aspects of the present disclosure further include systems for practicing the subject methods. In embodiments, systems include a flow channel with an inlet and an outlet defining a fluid flow path and an acoustic concentrator having an acoustic field generator soldered to an external surface of the flow channel and configured to produce an acoustic field in the fluid flow path to separate larger components from smaller components in the biological sample. The subject systems are configured to facilitate the production of cell samples that exhibit low entrainment. Entrainment is a measure of the degree of aggregation of components (e.g. cells) in a liquid sample, defined as the ratio of the observed distribution of the component over the expected distribution based on a normal Poisson distribution. In certain aspects, the subject device may facilitate the production of samples with an entrainment factor of 2.0 to 0.0, such as 1.5 to 0.0, including 1.0 to 0.0, 0.75 to 0.0, 0.5 to 0.0, 0.4 to 0.02, or 0.25 to 0.0, where a value of 1.0 represents a normal Poisson distribution, less than one is more ordered than predicted by Poisson statistics and values greater than 1 reflect sample aggregation.

The subject systems may, in certain instances, be configured as a flow-through system for analyzing liquid samples. By "flow-through" is meant that a liquid sample enters the system through the inlet, be carried through the system along the flow path, and then exit the system through the outlet. The system may be configured to carry a continuous stream of the sample through the flow channel and continuously separate components (e.g., cells) in the sample as the sample flows through the flow channel based on the acoustic contrast factors (also called an Φ-factor). The flow channel may have 2 or more inlets and outlets as desired. For example, the flow channel may have 2 or more inlets, such as 3 or more inlets and including 5 or more inlets. In certain embodiments, the flow channel includes between 2 and 5 inlets, such as between 2 and 4 inlets and including 3 inlets. Likewise, the flow channel includes 2 or more outlets, such as 2 or more outlets, such as 3 or more outlets and including 5 or more outlets. In certain embodiments, the flow channel includes between 2 and 5 outlets, such as between 2 and 4 outlets and including 3 outlets.

Each of the inlets may be configured for introducing any component into the subject systems, such as for example the biological sample, reagents, solvents and buffers. Where the system includes more than one inlet, each inlet may be employed to introduce the same or different components. For example, one inlet may be employed to introduce fluidic sample while one or more alternate inlets may be employed for introducing a wash buffer or sheath fluid. Each desired component may be introduced into the inlet manually (e.g., by syringe or syringe pump) or by one or more injectors (e.g., computer controlled injection systems, peristaltic pump systems, etc.). The flow channel may have any convenient configuration. While the cross sectional shape may vary, in some instances, cross-sectional shapes of channels of interest include, but are not limited to: rectilinear cross sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion, etc. The dimensions of the channel in the acoustic concentrator may vary, such as from 100-550 µm x 50-250 µm x 20-100mm, such as 150-500 µm x 75-200 µm x 25-75 mm, such as 200-400 µm x 100-200 µm x 30-60 mm.

The flow rate through the flow channel may vary depending on the desired separation, concentration or subsequent analysis in fluid communication with the subject system, as described in greater detail below. In certain embodiments, the system is configured to have a flow rate of 1 µL/min or more, such as 10 µL/min or more, including 30 µL/min or more, or 40 µL/min or more, or 50 µL/min or more, or 60 µL/min or more, or 80 µL/min or more, or 100 µL/min or more, or 200 µL/min or more, or 300 µL/min or more, or 400 µL/min or more, or 500 µL/min or more, or 750 µL/min or more, or 1 mL/min or more, or 2 mL/min or more, or 5 mL/min or more, or 10 mL/min or more, or 100 mL/min to 1L/min. In certain aspects, where the system is coupled to a cell sorter or flow cytometer, the flow rate of the system is such that output from the system is optimal for subsequent analysis using the cell sorter or flow cytometer, such as 20 to 150 µL/min, including 30 to 100 µL/min, such as 40 to 60 µL/min. In some embodiments, the subject systems are configured to provide a constant flow rate. By "constant flow rate" is meant that the rate of fluid flow through the system increases or decreases by 2% or less, such as by 1.5% or less, such as by 1% or less, such as 0.5% or less, such as 0.5% or less and including changes by 0.1% or less.

Aspects of the subject systems include one or more of the acoustic concentrators as described above. Acoustic concentrators of interest include an acoustic field generator soldered to the flow channel. In the subject systems according to certain embodiments, the biological sample begins by flowing along the sides of the flow channel. An acoustic standing wave is induced in the flow channel with the soldered acoustic field generator. The acoustic standing wave creates a pressure node in the center of the flow channel. An acoustic radiation force is exerted on larger components in the biological sample, such as tissue, tissue fragments and agglomerated cells, and these components are moved towards the center of the channel (i.e., the node of the acoustic standing wave), where these components are carried through the flow channel by a laminar flow of wash buffer. Smaller components in the biological sample, such as individual cells, cellular debris and non-cellular macromolecules are retained along the walls of the channel and are carried by a different laminating flow of buffer. In these embodiments, by applying the acoustic standing wave to the biological sample, larger components are separated from smaller components in the biological sample within the flow channel.

Since in these embodiments, the fluidic flow through the acoustic concentrator is configured to be laminar, when an acoustic field is applied tissue, tissue fragments, tissue aggregates, cell aggregates and other agglomerated components of the biological sample are forced to the center of the channel into a laminate of flowing wash buffer (i.e., the node of the acoustic standing wave). These components exit the flow channel through a dedicated sample outlet while cells from the biological sample retained in parallel laminating sample streams along the channel wall may be directed to two or more alternate sample outlets.

As described above, the flow channel may be formed from any convenient rigid material. In embodiments, the flow channel is formed from any suitable material which can propagate the acoustic radiation force exerted by the acoustic field generator as well as being a material that is compatible with the fluidic sample flowed therethrough. In embodiments, the flow channel may be metal, glass (e.g., Pyrex glass, borosilicate glass), ceramic or plastic. In certain embodiments, the flow channel is formed from glass, such as a borosilicate glass. In other embodiments, the flow channel is formed from a plastic, such as a rigid plastic, polymeric or thermoplastic material. For example, suitable plastics may include polycarbonates, polyvinyl chloride (PVC), polyurethanes, polyethers, polyamides, polyimides, or copolymers of these thermoplastics, such as PETG (glycol-modified polyethylene terephthalate), among other polymeric plastic materials. In certain embodiments, the flow channel is formed from a polyester, where polyesters of interest may include, but are not limited to poly(alkylene terephthalates) such as poly(ethylene terephthalate) (PET), bottle-grade PET (a copolymer made based on monoethylene glycol, terephthalic acid, and other comonomers such as isophthalic acid, cyclohexene dimethanol, etc.), poly(butylene terephthalate) (PBT), and poly(hexamethylene terephthalate); poly(alkylene adipates) such as poly(ethylene adipate), poly(1,4-butylene adipate), and poly(hexamethylene adipate); poly(alkylene suberates) such as poly(ethylene suberate); poly(alkylene sebacates) such as poly(ethylene sebacate); poly(ε-caprolactone) and poly(β-propiolactone); poly(alkylene isophthalates) such as poly(ethylene isophthalate); poly(alkylene 2,6-naphthalene-dicarboxylates) such as poly(ethylene 2,6-naphthalene-dicarboxylate); poly(alkylene sulfonyl-4,4'-dibenzoates) such as poly(ethylene sulfonyl-4,4'-dibenzoate); poly(p-phenylene alkylene dicarboxylates) such as poly(p-phenylene ethylene dicarboxylates); poly(trans-1,4-cyclohexanediyl alkylene dicarboxylates) such as poly(trans-1,4-cyclohexanediyl ethylene dicarboxylate); poly(1,4-cyclohexane-dimethylene alkylene dicarboxylates) such as poly(1,4-cyclohexane-dimethylene ethylene dicarboxylate); poly([2.2.2]-bicyclooctane-1,4-dimethylene alkylene dicarboxylates) such as poly([2.2.2]-bicyclooctane-1,4-dimethylene ethylene dicarboxylate); lactic acid polymers and copolymers such as (S)-polylactide, (R,S)-polylactide, poly(tetramethylglycolide), and poly(lactide-co-glycolide); and polycarbonates of bisphenol A, 3,3'-dimethylbisphenol A, 3,3',5,5'-tetrachlorobisphenol A, 3,3',5,5'-tetramethylbisphenol A; polyamides such as poly(p-phenylene terephthalamide); polyesters; etc.

As described above, the acoustic field generator is soldered to the external wall of the flow channel. Acoustic field generators of interest include, but are not limited to, piezoelectric transducers, ultrasonic wave propagators, surface acoustic wave generators, among other devices capable of producing an acoustic radiation force in a fluidic sample. In certain embodiments, acoustic field generators of interest are piezoelectric transducers. The piezoelectric transducer may be formed from any suitable piezoelectric material, such as quartz, lithium niobate, lead metaniobate, and polycrystalline ceramics including polycrystalline ceramics with perovskite layer structures, tungsten bronze, bismuth layer or double perovskite layer structures, lead free pieozoelectric materials with perovskite structures such as (K,Na)NbO₃ or (Bi,Na)TiO₃, as well as lead containing polycrystalline ferroelectric ceramics such as PZT (lead zirconate titanate) or derivatives thereof (e.g., soft-type PZTs such as PZT5H and PZT5A and hard-type PZTs such as PZT4 and PZT8). In certain embodiments, the acoustic field generator includes PZT. In certain instances, the piezoelectric transducer is of the multi-layer type, but a bimorph piezoelectric element may also be used as well as any other kind of ultrasound generating element with suitable dimensions. The acoustic concentrator may include one or more acoustic field generators soldered to the flow channel, such as 2 or more, such as 3 or more, such as 4 or more, such as 5 or more and including 10 or more acoustic field generators soldered to the flow channel.

The acoustic field generator may be of any desirable shape, such as a rectilinear shape (e.g., squares, rectangles, trapezoids, triangles, hexagons, etc.), a curvilinear shape (e.g., circles, ovals, etc.) as well as irregular shapes, (e.g., a parabolic bottom portion coupled to a planar top portion). In certain embodiments, the acoustic field generator is a cube or bar-shaped piezoelectric transducer. In certain embodiments, the acoustic field generator is a cube or bar-shaped piezoelectric transducer having a substantially flat face that is soldered to the flow channel. By "having a substantially flat face" is meant that the acoustic field generator does not wrap (wholly or partially) around the flow channel. As such, in these embodiments, the acoustic field generator is bar-shaped or cube-shaped having one of the flat edge faces soldered to the flow channel.

Depending on the size of the flow channel (as described in greater detail below), the acoustic field generator may have a width that varies, ranging from 1 mm to 15 mm, such as from 2 mm to 14 mm, such as from 3 mm to 13 mm, such as from 4 mm to 12 mm and including from 5 mm to 10 mm. In certain embodiments, the width of the acoustic field generator is 5 mm. The length of the acoustic field generator may also vary, ranging from 1 mm to 25 mm, such as from 2 mm to 22.5 mm, such as from 3 mm to 20 mm, such as from 4 mm to 17.5 mm and including from 5 mm to 15 mm. In certain embodiments, the acoustic field generator is 10 mm. In certain instances, the acoustic field generator is a PZT piezoelectric transducer having a width of 5 mm and a length of 10 mm.

In embodiments, all or part of the acoustic field generator positioned proximate to the flow channel may be soldered to the flow channel. For example, where the acoustic field generator is a bar-shaped or cube-shaped piezoelectric transducer, all or part of the flat edge face positioned proximate to the flow channel may be soldered to the flow channel, such as 10% or more of the flat edge face positioned proximate to the flow channel, such as 15% or more, such as 25% or more, such as 50% or more, such as 75% or more, such as 90% or more and including 95% or more. In certain embodiments, the entire flat edge face (i.e., 100%) of the acoustic field generator is soldered to the flow channel. As such, the acoustic field generator may be soldered to the flow channel over an area of from 1 mm² to 250 mm², such as from 2 mm² to 225 mm², such as from 3 mm² to 200 mm², such as from 4 mm² to 175 mm², such as from 5 mm² to 150 mm², such as from 6 mm² to 125 mm², such as from 7 mm² to 100 mm², such as from 8 mm² to 75 mm² and including from 10 mm² to 50 mm².

Acoustic field generators of interest are configured to apply an acoustic wave that has frequency of that corresponds to the fundamental resonance mode of the vibration transducer (e.g., about 2MHz for many PZT plates). The frequency may, in some embodiments, instead correspond to a harmonic of the vibration transducer, such as a first harmonic, second harmonic, and the like. In various aspects, the frequency applied may be about 1.5 MHz or more, such as 2 MHz or more, such as 2.5 MHz or more, such as 3 MHz or more, such as 3.5 MHz or more, such as 4 MHz or more, such as 4.5 MHz or more, such as 5 MHz or more, such as 5.5 MHz or more and including about 6 MHz or more. For example, the frequency of applied acoustic wave may range from 1.0 MHz to 6MHz, such as from 1.5 to 5.5 MHz, such as from 2 MHz to 5 MHz, such as from 2.5 to 4.5 MHz and including from 3 MHz to 4 MHz. An upper limit for the frequency of the applied acoustic wave may, in certain instances, be 10 MHz or less, such as 7.5 MHz or less, and including 5 MHz or less. The acoustic field generator is configured to apply an acoustic wave having a pressure amplitude that varies and may range from 0.01 MPa to 1 MPa, such as from 0.05 MPa to 0.95 MPa, such as from 0.1 MPa to 0.9 MPa, such as from 0.2 MPa to 0.8 MPa and including from 0.25 MPa to 0.75 MPa.

The activation voltage that is applied may also vary. For example, in certain aspects an activation voltage is 0.1 Vₚₚ to 100 Vₚₚ or higher, such as 0.1 Vₚₚ to 1 Vₚₚ, 1 Vₚₚ to 10 Vₚₚ, 10 Vₚₚ to 20 Vₚₚ, 20 Vₚₚ to 30 Vₚₚ, 30 Vₚₚ to 40 Vₚₚ, 40 Vₚₚ to 50 Vₚₚ, 50 Vₚₚ to 75 Vₚₚ, 75 Vₚₚ to 100 Vₚₚ, or 100 Vₚₚ or higher.

In certain embodiments, an acoustic concentrator is controlled by a processor configured to control the acoustic field generator. The processor may be contained within a control unit or control box. For instance, the processor may be configured to control the acoustic field generator by altering one or more of the shape, frequency and power of the electrical energy delivered to the acoustic field generator.

The flow rate of an acoustic concentrator may vary. In certain embodiments, the flow rate of the acoustic concentrator is adjusted such that the output from the acoustic concentrator is optimal for feedback monitoring, such as 20 to 150 µL/min, including 30 to 100 µL/min, such as 40 to 60 µL/min. The flow rate of the acoustic concentrator may be adjusted such that the output from the acoustic concentrator device is optimal for subsequent analysis by a particular device, such as a cell sorter.

In certain aspects, the flow rate of an acoustic concentrator may be controlled by modulating one or more pumps (e.g., a syringe pump, such as a WPI sp210iwz distributed by World Precision Instruments Inc., Sarasota, FL) or valves (e.g., pinch valves). The flow rate may, in certain embodiments, be controlled by a processor, such as a processor described above.

In certain aspects, the rate at which the subject systems separate larger components from smaller components in the biological sample is 1 µl/min or more. For example, in certain embodiments the rate is 10 µl/min or more, including 10 µl/min to 50 µl/min, 50 µl/min to 100 µl/min, 100 µl/min to 200 µl/min, 200 µl/min to 300 µl/min, 300 µl/min to 400 µl/min, 400 µl/min to 500 µl/min, 500 µl/min to 600 µl/min, 600 µl/min to 700 µl/min, 700 µl/min to 800 µl/min, 800 µl/min to 900 µl/min, 900 µl/min to 1 ml/min, 1 ml/min to 10 ml/min, 10 ml/min to 20 ml/min, 20 ml/min to 30 ml/min, 30 ml/min to 40 ml/min, 40 ml/min to 50 ml/min, 50 ml/min to 60 ml/min, 60 ml/min to 70 ml/min, 70 ml/min to 80 ml/min, 80 ml/min to 90 ml/min, 90 ml/min to 100 ml/min, 100 ml/min to 150 ml/min, 150 ml/min to 200 ml/min, 200 ml/min to 500 ml/min, or 500 ml/min to 1 L/min.

In certain embodiments, the subject systems are configured to separate components of the biological sample based on size. For example, depending on the components of the biological sample, the system may be configured separate out components which have diameters of 5 µm or greater, such as 10 µm or greater, such as 25 µm or greater, such as 50 µm or greater and including 100 µm or greater, such as from 10 to 25 µm, such as from 25 to 50 µm, such as from 50 to 75 µm and including from 75 to 100 µm. In some embodiments, the acoustic concentrator is configured to vary acoustic wave frequency and amplitude in a manner sufficient to separate tissue, tissue fragments and cell aggregates from individual cells, cellular debris and non-cellular macromolecules in the biological sample. In other embodiments, the acoustic concentrator is configured to vary acoustic wave frequency and amplitude in a manner sufficient to separate individual cells from cellular debris and non-cellular macromolecules in the biological sample.

In some instances, to achieve a desired flow rate, the flow channel may include a plurality of parallel flow paths (e.g., separation channels). For example, in certain embodiments two or more parallel flow paths are used, including 3 or more, such as 5 or more, 8 or more, 15 or more, 25 or more, 40 or more, 60 or more, 80 or more, 100 or more, 125 or more, 150 or more, 200 or more, 300 or more, 400 or more, 500 or more, or 1000 or more. The plurality of flow paths may be contained on one or more chips, such as 2 or more, 5 or more, 10 or more, 20 or more, 50 or more, or 100 or more.

In some embodiments, the subject systems may contain two or more acoustic concentrators, such as 3 or more, including 4 or more, 5 or more, 6 or more, or 7 to 10. Where systems include 2 or more acoustic concentrators, the acoustic concentrators may be arranged in any convenient configuration, such as in a serial configuration, parallel configuration, or a combination of the two. Moreover, when a subject device contains 2 or more acoustic concentrators, the acoustic concentrators may be substantially identical, identical, or heterogeneous (e.g., differ in one or more ways, such as in the dimensions of the flow channel, the applied voltage, the type of soldered acoustic field generator, etc.). Where systems include more than one acoustic concentrator, the number of inlets and outlets may be the same or different for each acoustic concentrator.

The subject systems as described above may in some aspects also contain one or more additional components. Examples of such components include, but are not limited to, one or more valves (e.g., pinch valves, and the like), reservoirs (e.g., sample reservoirs, wash reservoirs, waste reservoirs, and the like), pumps (e.g., syringe pumps, peristaltic pumps, and the like), connective tubing (e.g., silicone tubing), housings, processors, and the like.

The subject systems can be configured to for practicing the subject methods are any suitable temperature so long as the viability of the cells collected is preserved as desired. As such, systems may be configured to provide a temperature which ranges, such as from - 80 °C to 100 °C, such as from -75 °C to 75 °C, such as from -50 °C to 50 °C, such as from - 25 °C to 25 °C, such as from -10 °C to 10 °C, and including from 0 °C to 25 °C.

In certain embodiments, systems are coupled to one or more analytical devices for analyzing the collected cells. In some instances, the analytical device is a cell sorter or flow cytometer for sorting or analyzing the collected cells. Suitable cell sorters and flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255. In certain instances, the coupled analytical device is a BD Biosciences FACSCanto^{™} flow cytometer, a BD Biosciences Influx^{™} cell sorter, or the like.

### KITS

Also provided are kits for practicing one or more embodiments of the above-described methods. The subject kits may include two or more of the subject acoustic concentrators described herein as well as various components and reagents. In some embodiments, kits include the components of the acoustic concentrator and instructions for soldering the acoustic field generator to the flow channel with a solder. For example, kits may include an acoustic field generator, a flow channel and an amount of solder sufficient to solder the acoustic field generator to the flow channel.

In some instances, the kits include at least reagents finding use in the methods (e.g., as described above), such as a wash solution or buffer for washing a reusable flow channel, empty syringes for delivering biological sample or wash buffer, empty syringes for retrieving collected cells, syringes preloaded with wash buffer or biological sample.

The various assay components of the kits may be present in separate containers, or some or all of them may be pre-combined. For example, in some instances, one or more components of the kit, e.g., one or more acoustic concentrators, are present in a sealed pouch, e.g., a sterile foil pouch or envelope.

In other instances kits include a computer readable medium having a computer program stored thereon, wherein the computer program, when loaded into a computer, operates the computer to perform a flow cytometric assay as described herein; and a physical substrate having an address from which to obtain the computer program. In addition to the above components, the subject kits may further include instructions for practicing the methods. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, etc. Yet another means would be a computer readable medium, e.g., CD, DVD, Blu-Ray, flash memory, etc., on which the information has been recorded. Yet another means that may be present is a website address which may be used via the Internet to access the information at a removed site.

### UTILITY

The subject devices, systems, methods, and kits find use in a variety of different applications where it is desirable to sort or concentrate components (e.g., cells) in a liquid sample. The present disclosure also finds use in applications where cells prepared from a biological sample may be desired for research, laboratory testing or for use in therapy. In some embodiments, the subject methods and devices may facilitate the obtaining individual cells prepared from a target fluidic or tissue biological sample. For example, the subject methods and systems facilitate obtaining cells from fluidic or tissue samples to be used as a research or diagnostic specimen for diseases such as cancer. Likewise, the subject methods and systems facilitate obtaining cells from fluidic or tissue samples to be used in therapy. Methods and devices of the present disclosure allow for separating and collecting cells from a biological sample (e.g., organ, tissue, tissue fragment, fluid) at high efficiency, high flow rate and low cost.

Although the foregoing invention has been described in some detail by way of illustration and example for purposes of clarity of understanding, it is readily apparent to those of ordinary skill in the art in light of the teachings of this disclosure that certain changes and modifications may be made thereto without departing from the scope of the appended claims.

Accordingly, the preceding merely illustrates the principles of the invention. It will be appreciated that those skilled in the art will be able to devise various arrangements which, although not explicitly described or shown herein, embody the principles of the invention and are included within its scope. Furthermore, all examples and conditional language recited herein are principally intended to aid the reader in understanding the principles of the invention being without limitation to such specifically recited examples and conditions. The scope of the present invention, therefore, is not intended to be limited to the exemplary embodiments shown and described herein. Rather, the scope of the present invention is embodied by the appended claims.

## Claims

1. An acoustic separator (100) comprising an acoustic field generator (102) soldered to a flow channel (101) comprising a planar substrate having a first and a second inlet (101a, 101b) and a first and a second outlet (101c, 101d) defining a linear fluid flow path (101e) therebetween and configured to produce an acoustic field in the fluid flow path.

2. The acoustic separator (100) according to claim 1, wherein the acoustic field generator (102) is a piezoelectric transducer.

3. The acoustic separator (100) according to any one of claims 1-2, wherein the flow channel (101) comprises glass.

4. The acoustic separator (100) according to any one of claims 1-3, wherein a metal layer is present on an external surface of the flow channel (101) between the flow channel and the piezoelectric transducer, preferably wherein the metal layer is covalently bonded with the external surface.

5. The acoustic separator according to claim 4, wherein the metal layer comprises gold, chromium, platinum or a combination thereof, and preferably comprises gold and tin.

6. The acoustic separator according to any one of claims 4 or 5, wherein the metal layer comprises gold in an amount from 50% to 90% by weight and tin in an amount from 10% to 90% by weight, preferably wherein the metal layer comprises gold in an amount of 75% by weight and tin in an amount of 25% by weight.

7. The acoustic separator according to any one of claims 4-6, wherein the metal layer has a thickness of from 1 µm to 10 µm.

8. The acoustic separator according to any one of claims 1-7, wherein the acoustic field generator comprises lead zirconate titanate.

9. The acoustic separator according to any one of claims 1-7, wherein the acoustic field generator is soldered to the flow channel with a solder composition having a melting temperature that is lower than the Curie temperature of the acoustic field generator by 100 °C or more, preferably having a melting temperature of 200 °C or less and comprising indium, indium-tin or indium-silver.

10. A method of producing an acoustic separator according to any one of claims 1-9, the method comprising soldering an acoustic field generator to a flow channel comprising a fluid flow path.

11. A system comprising:
a flow channel comprising an inlet and an outlet defining a fluid flow path there between; and
an acoustic separator according to any one of claims 1-9 and configured to produce an acoustic field in the fluid flow path.

12. A method of processing a sample, the method comprising applying an acoustic wave to the sample in a fluid flow stream with an acoustic separator according to any one of claims 1-9, wherein the acoustic wave is sufficient to acoustically separate larger components from smaller components in the sample.

13. The acoustic separator according to any one of claims 1-9, wherein the acoustic separator comprises a first liquid medium and a second liquid medium, preferably wherein the first and second liquid media comprise a density difference that is 0.01% or greater, more preferably wherein the first and second liquid media comprise a density difference that is 25% or less.

14. The acoustic separator according to any one of claims 1-9, 13, wherein the flow channel is an enclosed flow channel comprising outer walls that surround a central fluid flow path.

15. The acoustic separator according to any one of claims 1-9, 13, 14, wherein the flow channel comprises a plurality of inlets and a plurality of outlets, preferably wherein each inlet of the plurality of inlets introduces one of a sample, wash buffer, or sheath fluid into the flow channel, more preferably wherein the plurality of outlets comprises a split channel outlet configured to provide larger components of a sample through a center outlet and smaller components of a sample through one or more side outlets.

## Patentansprüche

1. Akustischer Separator (100), umfassend einen akustischen Feldgenerator (102), der an einen Strömungskanal (101) gelötet ist, der ein planares Substrat mit einem ersten und einem zweiten Einlass (101a, 101b) und einem ersten und einem zweiten Auslass (101c, 101d) umfasst, die einen linearen Fluidströmungsweg (101e) dazwischen definieren und konfiguriert sind, um ein akustisches Feld in dem Fluidströmungsweg zu erzeugen.

2. Akustischer Separator (100) nach Anspruch 1, wobei der akustische Feldgenerator (102) ein piezoelektrischer Wandler ist.

3. Akustischer Separator (100) nach einem der Ansprüche 1 bis 2, wobei der Strömungskanal (101) Glas umfasst.

4. Akustischer Separator (100) nach einem der Ansprüche 1 bis 3, wobei eine Metallschicht auf einer Außenoberfläche des Strömungskanals (101) zwischen dem Strömungskanal und dem piezoelektrischen Wandler vorhanden ist, vorzugsweise wobei die Metallschicht kovalent mit der Außenoberfläche gebunden ist.

5. Akustischer Separator nach Anspruch 4, wobei die Metallschicht Gold, Chrom, Platin oder eine Kombination davon umfasst, und vorzugsweise Gold und Zinn umfasst.

6. Akustischer Separator nach einem der Ansprüche 4 oder 5, wobei die Metallschicht Gold in einer Menge von 50 Gew.-% bis 90 Gew.-% und Zinn in einer Menge von 10 Gew.-% bis 90 Gew.-% umfasst, vorzugsweise wobei die Metallschicht Gold in einer Menge von 75 Gew.-% und Zinn in einer Menge von 25 Gew.-% umfasst.

7. Akustischer Separator nach einem der Ansprüche 4 bis 6, wobei die Metallschicht eine Dicke von 1 µm bis 10 µm aufweist.

8. Akustischer Separator nach einem der Ansprüche 1 bis 7, wobei der akustische Feldgenerator Bleizirkonattitanat umfasst.

9. Akustischer Separator nach einem der Ansprüche 1 bis 7, wobei der akustische Feldgenerator mit dem Strömungskanal mit einer Lötzusammensetzung verlötet ist, die eine Schmelztemperatur aufweist, die um 100 °C oder mehr niedriger ist als die Curie-Temperatur des akustischen Feldgenerators, vorzugsweise eine Schmelztemperatur von 200 °C oder weniger aufweist und Indium, Indium-Zinn oder Indium-Silber umfasst.

10. Verfahren zur Herstellung eines akustischen Separators nach einem der Ansprüche 1 bis 9, wobei das Verfahren das Löten eines akustischen Feldgenerators an einen Strömungskanal, der einen Fluidströmungsweg umfasst, umfasst.

11. System, umfassend:
einen Strömungskanal, der einen Einlass und einen Auslass umfasst, die einen Fluidströmungsweg dazwischen definieren; und
einen akustischen Separator nach einem der Ansprüche 1 bis 9 und konfiguriert, um ein akustisches Feld in dem Fluidströmungsweg zu erzeugen.

12. Verfahren zur Verarbeitung einer Probe, wobei das Verfahren das Anlegen einer akustischen Welle an die Probe in einem Fluidflussstrom mit einem akustischen Separator nach einem der Ansprüche 1 bis 9 umfasst, wobei die akustische Welle ausreichend ist, um größere Komponenten von kleineren Komponenten in der Probe akustisch zu separieren.

13. Akustischer Separator nach einem der Ansprüche 1 bis 9, wobei der akustische Separator ein erstes flüssiges Medium und ein zweites flüssiges Medium umfasst, vorzugsweise wobei das erste und das zweite flüssige Medium einen Dichteunterschied umfassen, der 0,01 % oder größer ist, mehr bevorzugt wobei das erste und das zweite flüssige Medium einen Dichteunterschied umfassen, der 25 % oder weniger beträgt.

14. Akustischer Separator nach einem der Ansprüche 1 bis 9, 13, wobei der Strömungskanal ein umschlossener Strömungskanal ist, der Außenwände umfasst, die einen zentralen Fluidströmungsweg umgeben.

15. Akustischer Separator nach einem der Ansprüche 1 bis 9, 13, 14, wobei der Strömungskanal eine Vielzahl von Einlässen und eine Vielzahl von Auslässen umfasst, vorzugsweise wobei jeder Einlass der Vielzahl von Einlässen eines von einer Probe, Waschpuffer oder Hüllfluid in den Strömungskanal einführt, mehr bevorzugt wobei die Vielzahl von Auslässen einen geteilten Kanalauslass umfasst, der konfiguriert ist, um größere Komponenten einer Probe durch einen zentralen Auslass und kleinere Komponenten einer Probe durch einen oder mehrere Seitenauslässe bereitzustellen.

## Revendications

1. Séparateur acoustique (100) comprenant un générateur de champ acoustique (102) soudé à un canal d'écoulement (101) comprenant un substrat plan ayant une première et une seconde entrée (101a, 101b) et une première et une seconde sortie (101c, 101d) définissant une voie d'écoulement de fluide linéaire (101e) entre elles et configuré pour produire un champ acoustique dans la voie d'écoulement de fluide.

2. Séparateur acoustique (100) selon la revendication 1, dans lequel le générateur de champ acoustique (102) est un transducteur piézoélectrique.

3. Séparateur acoustique (100) selon l'une quelconque des revendications 1 à 2, dans lequel le canal d'écoulement (101) comprend du verre.

4. Séparateur acoustique (100) selon l'une quelconque des revendications 1 à 3, dans lequel une couche métallique est présente sur une surface externe du canal d'écoulement (101) entre le canal d'écoulement et le transducteur piézoélectrique, de préférence dans lequel la couche métallique est liée de manière covalente à la surface externe.

5. Séparateur acoustique selon la revendication 4, dans lequel la couche métallique comprend de l'or, du chrome, du platine ou une combinaison de ceux-ci, et comprend de préférence de l'or et de l'étain.

6. Séparateur acoustique selon l'une quelconque des revendications 4 ou 5, dans lequel la couche métallique comprend de l'or en une quantité allant de 50 % à 90 % en poids et de l'étain en une quantité allant de 10 % à 90 % en poids, de préférence dans lequel la couche métallique comprend de l'or en une quantité de 75 % en poids et de l'étain en une quantité de 25 % en poids.

7. Séparateur acoustique selon l'une quelconque des revendications 4 à 6, dans lequel la couche métallique a une épaisseur allant de 1 µm à 10 µm.

8. Séparateur acoustique selon l'une quelconque des revendications 1 à 7, dans lequel le générateur de champ acoustique comprend du titanate-zirconate de plomb.

9. Séparateur acoustique selon l'une quelconque des revendications 1 à 7, dans lequel le générateur de champ acoustique est soudé au canal d'écoulement avec une composition de soudure ayant une température de fusion qui est inférieure à la température de Curie du générateur de champ acoustique de 100 °C ou plus, ayant de préférence une température de fusion de 200 °C ou moins et comprenant de l'indium, de l'indium-étain ou de l'indium-argent.

10. Procédé de production d'un séparateur acoustique selon l'une quelconque des revendications 1 à 9, le procédé comprenant le soudage d'un générateur de champ acoustique à un canal d'écoulement comprenant une voie d'écoulement de fluide.

11. Système comprenant :
un canal d'écoulement comprenant une entrée et une sortie définissant une voie d'écoulement de fluide entre elles ; et
un séparateur acoustique selon l'une quelconque des revendications 1 à 9 et configuré pour produire un champ acoustique dans la voie d'écoulement de fluide.

12. Procédé de traitement d'un échantillon, le procédé comprenant l'application d'une onde acoustique à l'échantillon dans un courant d'écoulement de fluide avec un séparateur acoustique selon l'une quelconque des revendications 1 à 9, dans lequel l'onde acoustique est suffisante pour séparer acoustiquement des composants plus grands de composants plus petits dans l'échantillon.

13. Séparateur acoustique selon l'une quelconque des revendications 1 à 9, dans lequel le séparateur acoustique comprend un premier milieu liquide et un second milieu liquide, de préférence dans lequel les premier et second milieux liquides comprennent une différence de densité qui est de 0,01 % ou plus, plus préférablement dans lequel les premier et second milieux liquides comprennent une différence de densité qui est de 25 % ou moins.

14. Séparateur acoustique selon l'une quelconque des revendications 1 à 9, 13, dans lequel le canal d'écoulement est un canal d'écoulement fermé comprenant des parois externes qui entourent une voie d'écoulement de fluide centrale.

15. Séparateur acoustique selon l'une quelconque des revendications 1 à 9, 13, 14, dans lequel le canal d'écoulement comprend une pluralité d'entrées et une pluralité de sorties, de préférence dans lequel chaque entrée de la pluralité d'entrées introduit l'un parmi un échantillon, un tampon de lavage, ou un fluide enveloppant dans la voie d'écoulement, plus préférablement dans lequel la pluralité de sorties comprend une sortie à canal divisé conçue pour fournir des composants plus grands d'un échantillon par une sortie centrale et des composants plus petits d'un échantillon par une ou plusieurs sorties latérales.
